Europäisches
Patentamt

European
Patent Office

Office européen
des brevets

(11) **EP 2 670 185 B1**

(12) **EUROPEAN PATENT SPECIFICATION**

(45) Date of publication and mention
of the grant of the patent:
**25.12.2019  Bulletin 2019/52**

(51) Int Cl.:
***H04W 24/08*** *(2009.01)*     ***H04W 28/06*** *(2009.01)*

(21) Application number: **11857085.2**

(22) Date of filing: **30.11.2011**

(86) International application number:
**PCT/JP2011/006684**

(87) International publication number:
**WO 2012/101709 (02.08.2012 Gazette 2012/31)**

(54) **THROUGHPUT ESTIMATION DEVICE**

DURCHSATZSCHÄTZVORRICHTUNG

DISPOSITIF D'ESTIMATION DE DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2011   JP 2011016232**

(43) Date of publication of application:
**04.12.2013   Bulletin 2013/49**

(73) Proprietor: **NEC Corporation**
**Tokyo 108-8001 (JP)**

(72) Inventor: **YOSHIDA, Hiroshi**
**Tokyo 108-8001 (JP)**

(74) Representative: **Vossius & Partner**
**Patentanwälte Rechtsanwälte mbB**
**Siebertstrasse 3**
**81675 München (DE)**

(56) References cited:
**JP-A- 2009 182 650      US-A1- 2005 190 732**
**US-A1- 2007 086 353      US-A1- 2009 003 236**
**US-A1- 2010 067 396      US-A1- 2010 098 047**
**US-A1- 2010 208 603**

• **HIROSHI YOSHIDA ET AL.: 'Analysis of Network
Dynamics by Viscoelastic Material Model' IEICE
TECHNICAL REPORT. IN, JOHO NETWORK vol.
109, no. 449, 25 February 2010, pages 349 - 354,
XP008170501**

**Description**

TECHNICAL FIELD

The present invention relates to throughput estimation devices estimating throughput.

BACKGROUND ART

When a transmitting device sends a data to a receiving device, there are cases that because some part of the data is lost (has disappeared), only the other part of the data arrives at the receiving device. Further, when the transmitting device sends a data to the receiving device, there are cases that because some part of the data is accumulated within the communication network, the arrival of the data at the receiving device is too late (the delay time, which is the time from the transmitting device sending the data to the data arriving at the receiving device, becomes too long).

Among the data sent by the transmitting device, the amount of the data (the data arrival amount) having arrived at (or being received by) the receiving device per unit time is called throughput.

For example, if the transmitting device sends a data to the receiving device at a transmission rate of 4 Mbps, then it is assumed that 25% of the data (that is, a part corresponding to 1Mbps) is lost. Here, the transmission rate is the amount of the data sent by the transmitting device per unit time. In this case, the receiving device receives the data at 3Mbps. That is, the throughput is 3Mbps.

Further, even if no data is lost, it is still assumed that the receiving device receives the data at 3Mbps because of the increase in delay time. In this case, the throughput is also 3Mbps.

If the data sent from the transmitting device to the receiving device is multimedia data such as video and/or audio data, then any loss of the data may cause noise to occur in the video and/or audio. Further, an excessive delay time may possibly bring a stop to the play of the video and/or audio.

Therefore, it is considered as preferable to estimate the throughput with a high accuracy, and adjust the data size of the multimedia data sent by the transmitting device based on the estimated throughput. Hence, techniques for estimating the throughput are being developed. The throughput estimation devices disclosed in WO 08/143026 A, JP 2004-254025 A, JP 2005-244851 A, JP 2007-116329 A, JP 2008-258877 A, JP 2008-278207 A (Patent Document 1 through Patent Document 6, respectively) are known as such kind of techniques.

US 2009/0003236 A1 relates to a system for estimating the geographical distribution of user throughput in a cellular system, including user terminals and a base station for effecting wireless packet communications with user terminals inside in its own cell using a shared channel.

US 2007/0086353 A1 relates to a maximum achievable bit rate estimation for the expected bit rate between a wireless client and an access point calculated in two phases.

US 2010/0098047 A1 relates to setting a data rate of encoded data of a transmitter.

However, such a case can be assumed as to apply the above throughput estimation devices to a mobile communication system in which a mobile station (a receiving device) and a transmitting device are communicably connected via a wireless link established between the mobile station and a base station on a mobile communication network.

In this case, even for a constant transmission rate, the data transmission rate through the wireless link still changes with any change in the quality of the wireless link (the wireless link quality). As a result, the throughput also changes. Here, the data transmission rate is the amount of the data transmitted per unit time through the wireless link.

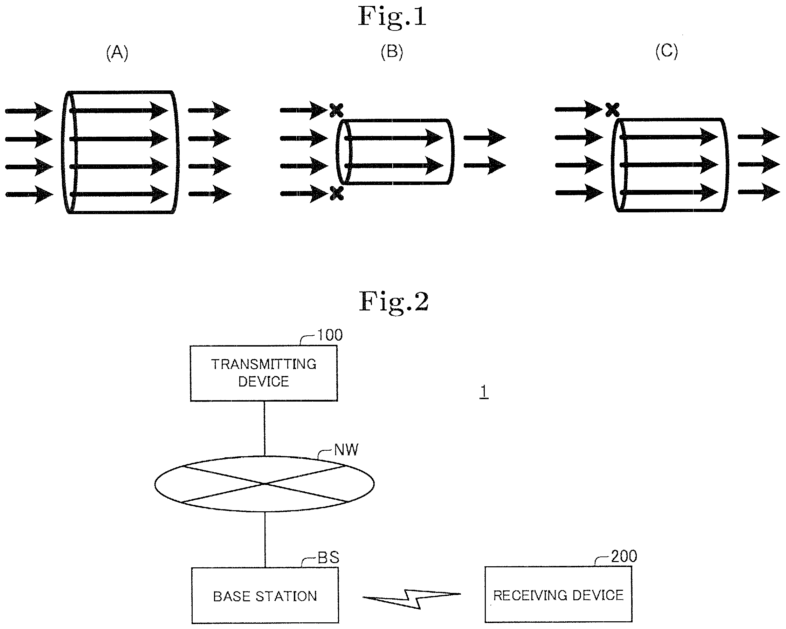

Referring to Figs. 1A to 1C, the throughput change with the change in the wireless link quality will be explained in more detail.

The pipes in Figs. 1A to 1C denote a wireless link. Figs. 1A to 1C show that the thicker the pipe, the higher the data transmission rate through the wireless link (i.e. the higher the wireless link quality).

The arrows entering in the pipe denote the transmission rate. Figs. 1A to 1C show that the more the number of the arrows entering in the pipe, the higher the transmission rate. Further, the arrows exiting from the pipe denote the throughput. Figs. 1A to 1C show that the more the number of the arrows exiting from the pipe, the higher the throughput.

Fig. 1A shows that both the wireless link quality and the throughput are at the highest level. Fig. 1B shows that both the wireless link quality and the throughput are at the lowest level. Fig. 1C shows that both the wireless link quality and the throughput are at the second highest level. In this manner, the throughput also changes with the change in the wireless link quality.

However, the above throughput estimation devices estimate the throughput without being based on the wireless link quality. Therefore, it is liable to be unable to estimate the throughput with a high accuracy when the data is sent via the wireless link.

SUMMARY

Hence, an exemplary object of the present invention is to provide a throughput estimation device capable of solving the above problem of "being unable to estimate the throughput with a high accuracy when the data is sent via the wireless link". This object is achieved with the features of the claims.

The throughput estimation device as described includes: a wireless link quality information acquisition means for acquiring wireless link quality information denoting a quality of a wireless link established between a mobile station and a base station on a mobile communication network; and a throughput estimation means for estimating a throughput which is the amount for the mobile station to receive per unit time a data sent by a transmitting device connected communicably with the mobile station via the wireless link, based on the acquired wireless link quality information.

The throughput estimation method as described includes: acquiring wireless link quality information denoting a quality of a wireless link established between a mobile station and a base station on a mobile communication network; and estimating a throughput which is the amount for the mobile station to receive per unit time a data sent by a transmitting device connected communicably with the mobile station via the wireless link, based on the acquired wireless link quality information.

The throughput estimation computer program as described includes instructions for causing an information processing device to carry out a process including the steps of: acquiring wireless link quality information denoting a quality of a wireless link established between a mobile station and a base station on a mobile communication network; and estimating a throughput which is the amount for the mobile station to receive per unit time a data sent by a transmitting device connected communicably with the mobile station via the wireless link, based on the acquired wireless link quality information.

Because the present invention is configured in the manner as described above, it is possible to estimate the throughput with a high accuracy when the data is sent via the wireless link.

BRIEF DESCRIPTION OF DRAWINGS

Figs. 1A to 1C are explanatory diagrams conceptually showing a change in the throughput with a change in the wireless link quality;

Fig. 2 shows a schematic configuration of a mobile communication system in accordance with a first exemplary embodiment of the present invention;

Fig. 3 is a block diagram showing a schematic function of the mobile communication system in accordance with the first exemplary embodiment of the present invention;

Fig. 4 is a graph showing an example of the changes with time in transmission rate and throughput when a transmitting device sends data to a receiving device via a wireless link;

Fig. 5 is graph showing the change with time in the value of wireless link quality;

Fig. 6 is a graph showing a correlation between the variation in the value of wireless link quality and the variation in throughput;

Fig. 7 is a graph showing an example of the respective changes with time in the estimated value of throughput, measured value of throughput, and smoothed CQI;

Figs. 8A to 8C are explanatory diagrams conceptually showing an influence exerted by cross-traffic on the throughput;

Fig. 9 is an explanatory diagram conceptually showing a dynamic model in accordance with a second exemplary embodiment of the present invention;

Fig. 10 is an explanatory diagram conceptually showing a dynamic model in accordance with a modification of the second exemplary embodiment of the present invention;

Fig. 11 is an explanatory diagram conceptually showing a dynamic model in accordance with another modification of the second exemplary embodiment of the present invention;

Fig. 12 is a block diagram showing a schematic function of a mobile communication system in accordance with the second exemplary embodiment of the present invention;

Fig. 13 is an explanatory diagram conceptually showing the contents of simulations in accordance with the second exemplary embodiment of the present invention;

Fig. 14 is a graph showing a pattern of the transmission rate used in the simulations in accordance with the second exemplary embodiment of the present invention;

Fig. 15 is a graph showing a change with time in the value of wireless link quality in a first simulation in accordance with the second exemplary embodiment of the present invention;

Fig. 16 is a graph showing a change with time in the value of wireless link quality in a second simulation in accordance with the second exemplary embodiment of the present invention;

Fig. 17 is a graph showing a change with time in the value of wireless link quality in a third simulation in accordance with the second exemplary embodiment of the present invention;

Fig. 18 is a graph showing a change with time in the value of wireless link quality in a fourth simulation in accordance with the second exemplary embodiment of the present invention;

Fig. 19 is a graph showing the respective changes with time in the transmission rate, measured value of throughput, and estimated value of throughput in the first simulation in accordance with the second exemplary embodiment of the present invention;

Fig. 20 is a graph showing the respective changes with time in the measured value of loss rate and estimated value of loss rate in the first simulation in accordance with the second exemplary embodiment of the present invention;

Fig. 21 is a graph showing the respective changes with time in the transmission rate, measured value of throughput, and estimated value of throughput in the second simulation in accordance with the second exemplary embodiment of the present invention;

Fig. 22 is a graph showing the respective changes with time in the measured value of loss rate and estimated value of loss rate in the second simulation in accordance with the second exemplary embodiment of the present invention;

Fig. 23 is a graph showing the respective changes with time in the transmission rate, measured value of throughput, and estimated value of throughput in the third simulation in accordance with the second exemplary embodiment of the present invention;

Fig. 24 is a graph showing the respective changes with time in the measured value of loss rate and estimated value of loss rate in the third simulation in accordance with the second exemplary embodiment of the present invention;

Fig. 25 is a graph showing the respective changes with time in the transmission rate, measured value of throughput, and estimated value of throughput in the fourth simulation in accordance with the second exemplary embodiment of the present invention;

Fig. 26 is a graph showing the respective changes with time in the measured value of loss rate and estimated value of loss rate in the fourth simulation in accordance with the second exemplary embodiment of the present invention; and

Fig. 27 is a block diagram showing a schematic function of a throughput estimation device in accordance with a third exemplary embodiment of the present invention.

EXEMPLARY EMBODIMENTS

Hereinbelow, referring to Figs. 1 through 27, explanations will be made with respect to each exemplary embodiment of a throughput estimation device, a throughput estimation method and a throughput estimation computer program in accordance with the present invention.

<A first exemplary embodiment>

(Configuration)

As shown in Fig. 2, a mobile communication system 1 in accordance with a first exemplary embodiment includes a transmitting device (throughput estimation device) 100, a receiving device (mobile station) 200, and a base station BS. The transmitting device 100 and the base station BS are connected communicably with each other via communication lines (communication lines constituting a mobile communication network in this example) NW.

The base station BS establishes a wireless link between itself and the receiving device 200. The wireless link constitutes the mobile communication network. The base station BS carries out communications between itself and the receiving device 200 via the established wireless link.

The transmitting device 100 is an information processing device. The transmitting device 100 includes a central processing unit (CPU) and a storage device (memory and hard disk drive (HDD)) which are not shown. The transmitting device 100 is configured to realize an aftermentioned function by letting the CPU implement a program stored in the storage device.

The receiving device 200 is a mobile terminal. For example, the receiving device 200 is a cellphone terminal, smartphone, personal computer, PHS (Personal Handyphone System), PDA (Personal Data Assistance; Personal Digital Assistant), car navigation terminal, gaming terminal, or the like.

The receiving device 200 includes a CPU, a storage device (memory and HDD), input device (touch panel, button, keyboard, mouse, etc., for example), and output device (display, etc.) which are all not shown. The receiving device 200 is configured to realize an aftermentioned function by letting the CPU implement a program stored in the storage device.

(Function)

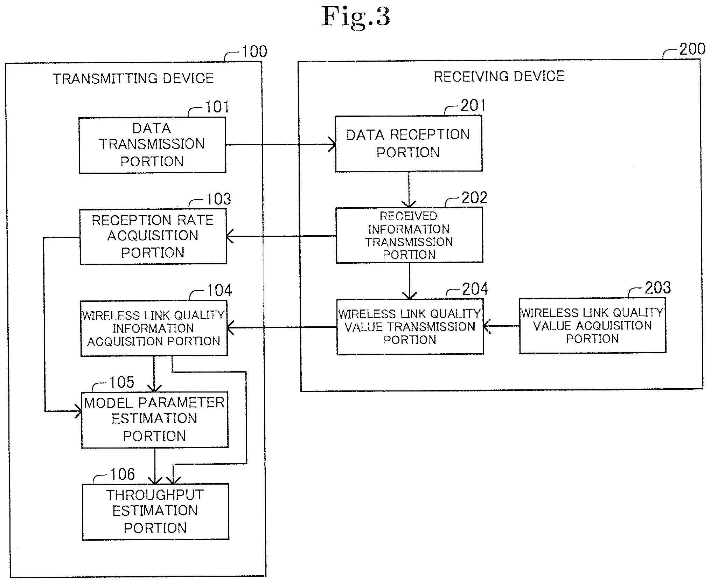

Fig. 3 is a block diagram showing a function of the mobile communication system 1.

The function of the mobile communication system 1 includes a data transmission portion 101, a reception rate acquisition portion (throughput acquisition means) 103, a wireless link quality information acquisition portion (wireless link quality information acquisition means) 104, a model parameter estimation portion (model parameter estimation means) 105, and a throughput estimation portion (throughput estimation means) 106.

Further, the function of the receiving device 200 includes a data reception portion 201, a received information transmission portion 202, a wireless link quality value acquisition portion 203, and a wireless link quality value transmission portion 204.

The data transmission portion 101 sends data to the receiving device 200. In this example, the data transmission portion 101 sends data according to UDP (User Datagram Protocol)/IP (Internet Protocol), or TCP (Transmission Control Protocol)/IP.

The data reception portion 201 receives the data sent by the transmitting device 100. The data reception portion 201 calculates (acquires) reception information each time a preset calculation period h passes over. The reception information includes information capable of calculating a reception rate which is the amount of the data received by the receiving device 200 per unit time from the transmitting device 100.

The received information transmission portion 202 sends the reception information acquired by the data reception portion 201 to the transmitting device 100.

The reception rate acquisition portion 103 receives the reception information sent by the received information transmission portion 202. The reception rate acquisition portion 103 calculates (acquires) the reception rate (throughput) which is the amount of the data received by the receiving device 200 per unit time from the transmitting device 100, based on the received reception information.

The wireless link quality value acquisition portion 203 acquires the value of wireless link quality which denotes the quality of the wireless link established between the base station BS and the receiving device 200 on the mobile communication network.

In this example, the value of wireless link quality is a channel quality indicator (CQI). Further, the value of wireless link quality may also be a signal to interference and noise power ratio (SINR), signal to interference power ratio (SIR), signal to noise ratio (SNR), or the like.

The wireless link quality value transmission portion 204 sends the value of wireless link quality acquired by the wireless link quality value acquisition portion 203, to the transmitting device 100.

The wireless link quality information acquisition portion 104 receives the value of wireless link quality sent by the wireless link quality value transmission portion 204. The wireless link quality information acquisition portion 104 carries out a smoothing process on the received value of wireless link quality, and acquires the smoothed value as wireless link quality information.

The wireless link quality information is information denoting the quality of the wireless link established between the base station BS and the receiving device 200 on the mobile communication network. In this example, the smoothing process is to take a moving average for the value of wireless link quality. That is, the wireless link quality information is the value of a moving average taken for the value of wireless link quality.

Further, the smoothing process may also be a process of calculating the value of averaging the value of wireless link quality acquired during each preset processing period. The wireless link quality information is the average value calculated for each processing period. Further, the smoothing process may also be a process of inputting the value of wireless link quality to a low-pass filter (LPF). In such case, the wireless link quality information is the value outputted from the low-pass filter.

Further, the wireless link quality information acquisition portion 104 may also be configured to acquire the received value of wireless link quality as the wireless link quality information.

The model parameter estimation portion 105 estimates model parameters based on the wireless link quality information acquired by the wireless link quality information acquisition portion 104, the reception rate (throughput) acquired by the reception rate acquisition portion 103, and an aftermentioned mathematical model. The model parameters are parameters for specifying the above mathematical model.

Hereinbelow, the mathematical model will be explained. The mathematical model denotes a relationship between the throughput and the wireless link quality information. The mathematical model is a model constructed by assuming equality between the throughput, and a polynomial function (a linear function or linear expression in this example) with the wireless link quality information as a variable. First, derivation of the mathematical model will be explained.

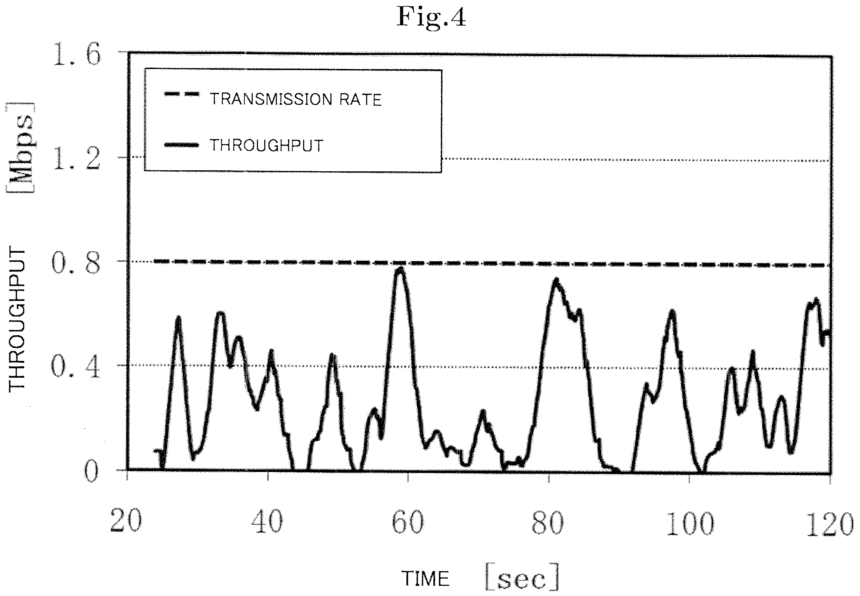

Fig. 4 is a graph showing an example of the changes with time in transmission rate and throughput when the transmitting device 100 sends data to the receiving device 200 via the wireless link. In this example, although the transmission rate is constant (a constant bit-rate (CBR)), the throughput is varying in a comparatively violent manner.

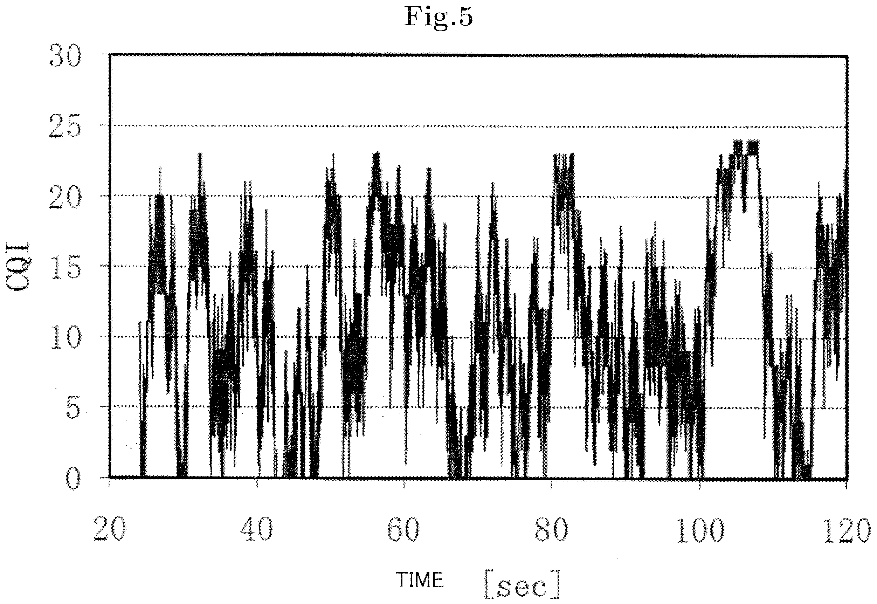

Fig. 5 is a graph showing the change with time in CQI as the value of wireless link quality in the above example. In this manner, the CQI is varying in a comparatively violent manner. Therefore, because the CQI (wireless link quality) varies in a comparatively violent manner, it is understood that the throughput also varies in a comparatively violent manner.

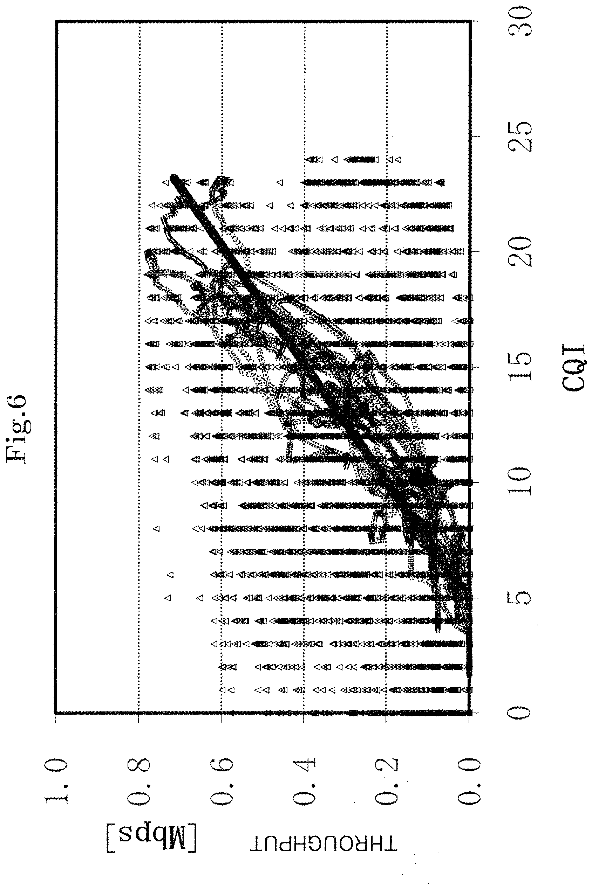

Fig. 6 is a graph showing a correlation between the variation in CQI and the variation in throughput. In Fig. 6, each triangle in solid lines denotes the throughput (measured value of throughput) and CQI (measured value of CQI) which are measured at an arbitrary point of time. By calculating a coefficient of correlation between the measured value of CQI and the measured value of throughput, the resultant coefficient of correlation is 0.64. Therefore, it can be said that there is a kind of correlation between the measured value of CQI and the measured value of throughput.

However, the CQI is varying more violently than the throughput. Hence, investigation is also made on the relationship between the value of having smoothed the CQI (the smoothed CQI, i.e., the wireless link quality information), and the measured value of throughput. In Fig. 6, each circle in dotted lines denotes the measured value of throughput and the smoothed CQI at an arbitrary point of time.

Then, by calculating a coefficient of correlation between the smoothed CQI and the measured value of throughput, the resultant coefficient of correlation is 0.93. In this manner, it can be said that the correlation between the smoothed CQI and the measured value of throughput is closer (stronger) than the correlation between the measured value of CQI and the measured value of throughput.

Therefore, it can be said that there is a linear relation between the smoothed CQI and the measured value of throughput. That is, based on the mathematical model constructed by assuming equality between the throughput, and a linear function with the smoothed CQI as a variable, it is possible to denote the relation between the smoothed CQI and the throughput with a high accuracy.

This mathematical model is called CQI linear model. This mathematical model is expressed by the following Formula 1. Here, v is the throughput, q is the smoothed CQI (i.e., the wireless link quality information), a is the slope of the linear expression, and b is the intercept of the linear expression, a and b constitute the model parameters.

$$[\text{Formula 1}]$$

$$v = aq + b$$

In this example, the model parameter estimation portion 105 calculates (estimates) the model parameters by using the least-squares estimation method based on the smoothed CQI, measured value of throughput, and Formula 1.

The throughput estimation portion 106 estimates the throughput based on the mathematical model specified by the model parameters estimated by the model parameter estimation portion 105, and the wireless link quality information acquired by the wireless link quality information acquisition portion 104.

(Operation)

Next, an operation of the aforementioned mobile communication system 1 will be explained.

First, the transmitting device 100 sends a data to the receiving device 200. With this, the receiving device 200 receives the data. Then, the receiving device 200 acquires reception information each time the aforementioned calculation period h passes over. Further, the receiving device 200 sends the acquired reception information to the transmitting device 100.

With that, the transmitting device 100 receives the reception information. Then, the transmitting device 100 acquires the throughput based on the received reception information.

Further, the receiving device 200 acquires the value of wireless link quality. Then, the receiving device 200 sends the acquired value of wireless link quality to the transmitting device 100. With this, the transmitting device 100 receives the value of wireless link quality. Then, the transmitting device 100 acquires the wireless link quality information based on the received value of wireless link quality.

Next, the transmitting device 100 estimates the model parameters based on the acquired throughput and the acquired wireless link quality information.

Thereafter, the receiving device 200 acquires the value of wireless link quality again. Then, the receiving device 200 sends the acquired value of wireless link quality to the transmitting device 100. With this, the transmitting device 100 receives the value of wireless link quality. Then, the transmitting device 100 acquires the wireless link quality information based on the received value of wireless link quality.

Next, the transmitting device 100 estimates the throughput based on the mathematical model specified by the estimated model parameters, and the acquired wireless link quality information.

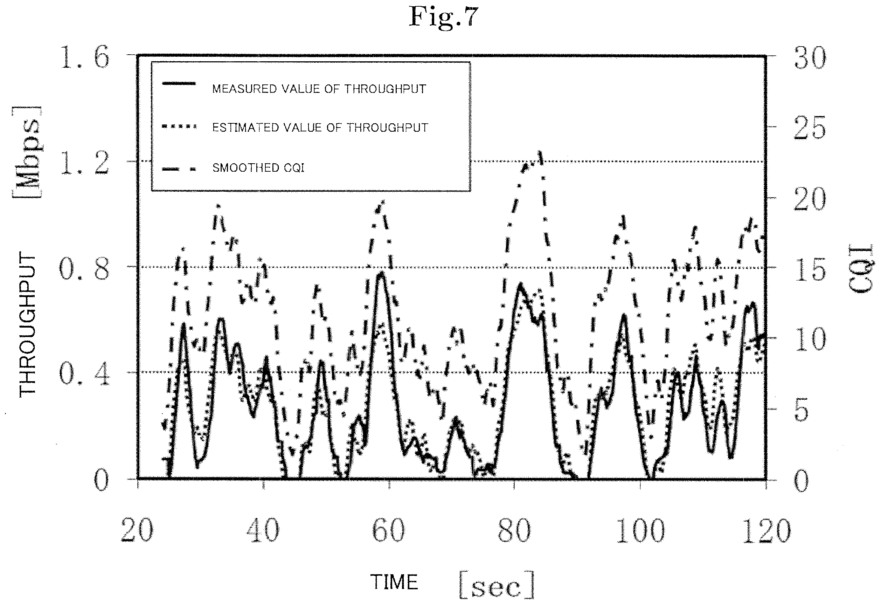

Fig. 7 is a graph showing an example of the respective changes with time in the throughput estimated by the transmitting device 100 (the estimated value of throughput), measured value of throughput, and smoothed CQI. In Fig. 7, the solid lines denote the measured value of throughput, the dotted lines denote the estimated value of throughput, and the chain lines denote the smoothed CQI.

In this manner, the transmitting device 100 can estimate the throughput with a high accuracy by using the CQI linear model.

As explained above, with the transmitting device (throughput estimation device) 100 in accordance with the first exemplary embodiment of the present invention, it is possible to estimate the throughput with a high accuracy when the data is sent via the wireless link.

<A second exemplary embodiment>

Next, a mobile communication system in accordance with a second exemplary embodiment of the present invention will be explained. The mobile communication system in accordance with the second exemplary embodiment differs from the aforementioned mobile communication system in accordance with the first exemplary embodiment in the mathematical model used by the transmitting device. Therefore, the following explanation will be focused on this difference.

Now, on many occasions, cross-traffic is present in a communication network. Here, the cross-traffic is the other traffic than the traffic of attention (the self-traffic) among the traffics passing through an interval on the communication pathway. Here, the self-traffic is the data sent from the transmitting device 100 to the receiving device 200.

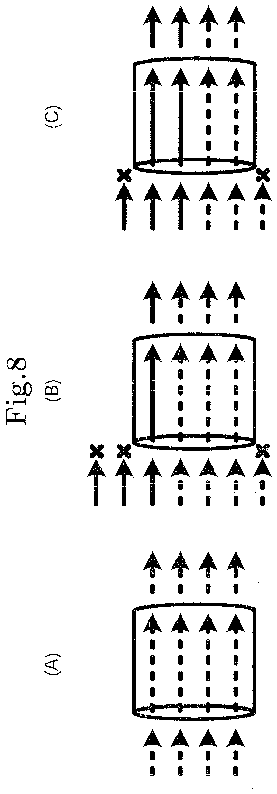

Referring to Figs. 8A to 8C, a detailed explanation will be made with respect to an influence exerted by the cross-traffic on the throughput.

The pipes in Figs. 8A to 8C denote a communication bandwidth of an interval with the cross-traffic present in the communication pathway.

The arrows entering in the pipe denote the transmission rate. Figs. 8A to 8C show that the more the number of the arrows entering in the pipe, the higher the transmission rate. Further, the arrows exiting from the pipe denote the throughput. Figs. 8A to 8C show that the more the number of the arrows exiting from the pipe, the higher the throughput. Further, the arrows in solid lines denote the self-traffic, while the arrows in dotted lines denote the cross-traffic.

In the above interval, if the communication bandwidth used by the self-traffic increases (if the state shown in Fig. 8A changes to the state shown in Fig. 8B), then the data loss rate and delay time related to the cross-traffic also increase. Here, the data loss rate is the proportion of data (packet, for example) disappearing from a communication network. Further, the delay time is the time span from the point of sending a data to the point of receiving the data.

On the other hand, if the cross-traffic is sent according to TCP, then a transmission rate control is carried out to reduce the data loss rate and delay time. That is, if the communication bandwidth used by the self-traffic increases, then the transmission rate for the cross-traffic is decreased. By virtue of this, the throughput of the self-traffic becomes even greater (to be the state shown in Fig. 8C).

In this manner, due to the interaction between the traffics, the throughput of the self-traffic undergoes a variation.

Hence, the transmitting device 100 in accordance with the second exemplary embodiment uses a mathematical model which has taken into consideration the influence from the interaction between the traffics on the throughput. This mathematical model denotes a relationship between the throughput, wireless link quality information, and transmission rate.

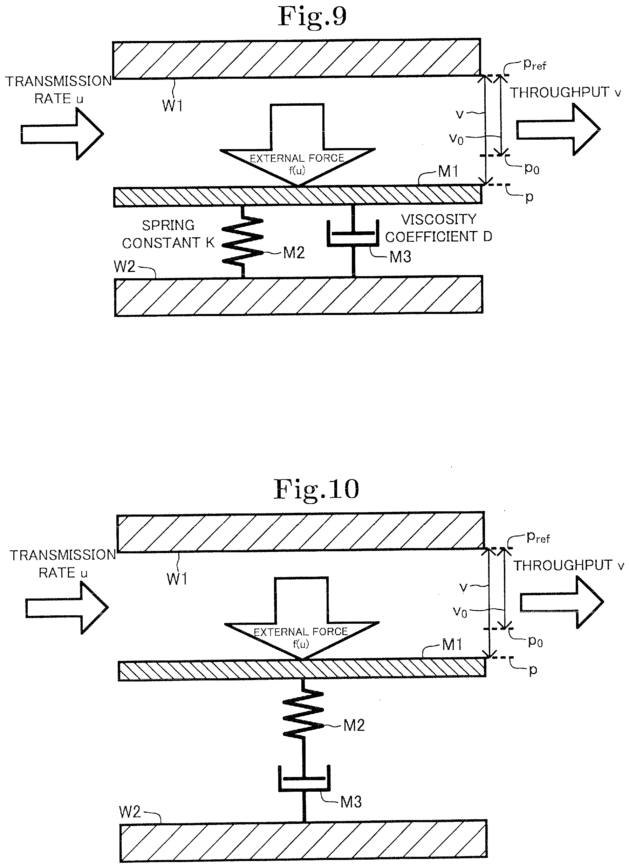

Here, referring to Fig. 9, the mathematical model in accordance with the second exemplary embodiment will be explained in detail.

As described above, it can be said that the qualitative relation between the cross-traffic flow and the throughput of the data sent from the transmitting device 100 to the receiving device 200 is a relation of mutually pushing away each other's flow (if one increases then the other is decreased, while if one decreases then the other is increased).

Hence, as shown in Fig. 9, the mathematical model is constructed by denoting the relation between the wireless link quality information, and the transmission rate and throughput for the self-traffic, based on a dynamic model (a viscoelastic body model) including a mobile body M1, a spring M2 as an elastic body (elastic element), and a dashpot M3 as a viscous body (viscous element).

This dynamic model simulates the data sent from the transmitting device 100 to the receiving device 200 by the fluid flowing through a passage defined by a first wall surface W1 and the mobile body M1. The mobile body M1 is a plate-like body which is arranged in the passage, and is movable in a preset moving direction (the vertical direction in Fig. 9).

The spring M2 is a coil spring with a spring constant (elastic coefficient) of K. The spring M2 has one end fixed to the mobile body M1 and the other end fixed to a second wall surface W2. By such configuration, the spring M2 deforms as much as the displacement of the mobile body M1 moving in the moving direction.

The dashpot M3 has a viscosity coefficient of D. The dashpot M3 has one end fixed to the mobile body M1 and the other end fixed to the second wall surface W2. By such configuration, the dashpot M3 delays the movement of the mobile body M1 in the moving direction due to some external force applied to the mobile body M1.

In this example, each of the spring constant K and the viscosity coefficient D is a constant value (has linear characteristics). Further, the spring constant K and/or the viscosity coefficient D may also have nonlinear characteristics.

The dynamic model assumes that by the fluid corresponding to the data sent at the transmission rate u (in bps) from the transmitting device 100 to the receiving device 200, the external force applied to the mobile body M1 in the moving direction is as great as f(u) in accordance with the transmission rate u. Further, the dynamic model assumes that the throughput v (in bps) is the distance in the moving direction between a preset reference position $p_{ref}$ (the position of the first wall surface W1 in this example) and the position p of the mobile body M1. That is, it can be said that this dynamic model denotes a relationship between the throughput and the transmission rate.

Further, in this dynamic model, when the mobile body M1 is positioned at a position $p_0$ (force-free position) away from the reference position $p_{ref}$ by the distance $v_0$ (force-free distance) in the moving direction, the spring M2 generates no elastic force (restoring force). Further, the elastic force generated by the spring M2 is as great as the value of the displacement $v - v_0$ of the mobile body M1 from the force-free position $p_0$, multiplied by the elastic coefficient K which is a proportionality coefficient, and acts in the opposite direction to the direction in which the mobile body M1 has moved from the force-free position $p_0$.

In addition, in this dynamic model, when the mobile body M1 stands still in the moving direction (the velocity is zero), the dashpot M3 generates no resisting force. Further, the resisting force generated by the dashpot M3 is as great as the value of the velocity of the mobile body M1 moving in the moving direction, multiplied by the viscosity coefficient D which is another proportionality coefficient, and acts in the opposite direction to the direction in which the mobile body M1 moves.

In this dynamic model, the equation governing the motion of the mobile body M1 is expressed as the following Formula 2. Further, the term dv/dt denotes the differential of the distance v with respect to time t in the moving direction between the reference position $p_{ref}$ and the position p of the mobile body M1.

[Formula 2]

$$D \frac{\mathrm{d}v}{\mathrm{d}t} + K(v - v_0) = f(u)$$

The spring constant K in this viscoelastic body model can be considered as denoting the "unlikeliness of pushing away" the cross-traffic. Further, the viscosity coefficient D can be considered as denoting either the "viscous degree" or the "slowness of response" of the cross-traffic.

Further, other models may also be used as the dynamic model. For example, it is possible to adopt a model as the dynamic model which has also taken into consideration the inertia force of the mobile body M1. By the inertia force of the mobile body M1, it is possible to denote the change of overshooting of the transmission rate related to the cross-traffic. In this dynamic model, the equation governing the motion of the mobile body M1 is expressed as the following Formula 3. Further, M is the mass of the mobile body M1. Further, $d^2v/dt^2$ is the second order differential of the distance v with respect to time t in the moving direction between the reference position $p_{ref}$ and the position p of the mobile body M1.

[Formula 3]

$$M \frac{\mathrm{d}^2v}{\mathrm{d}t^2} + D \frac{\mathrm{d}v}{\mathrm{d}t} + K(v - v_0) = f(u)$$

Further, the term "Kelvin-Voigt Model" is used to refer to the viscoelastic body model in which the spring M2 and dashpot M3 in parallel are connected to the mobile body M1 as described above. Further, as shown in Fig. 10, the dynamic model may also be a viscoelastic body model in which the spring M2 and dashpot M3 in series are connected to the mobile body M1. Such viscoelastic body model is called Maxwell Model.

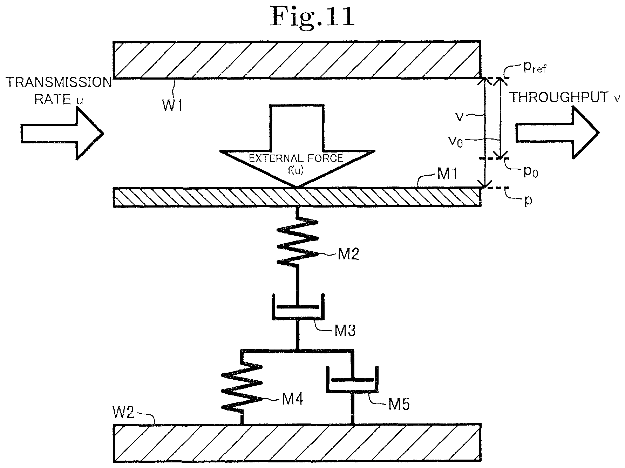

Further, as shown in Fig. 11, the dynamic model may also be a viscoelastic body model (four element model) including a plurality of (two in this example) springs M2 and M4, and a plurality of (also two in this example) dashpots M3 and M5. In this example, the spring M2 and dashpot M3 in series are connected to the mobile body M1, and the spring M4 and dashpot M5 in parallel are connected to the dashpot M3.

Further, the equation governing the motion of the mobile body M1 in the dynamic model may also include a term comprised of a third order differential of the distance v with respect to time t (a jerk or surge) in the moving direction between the reference position $p_{ref}$ and the position p of the mobile body M1, or a term comprised of a fourth or higher order differential of the same.

Now, the CQI linear model (Formula 1), which is the mathematical model in accordance with the aforementioned first exemplary embodiment, has taken into consideration the influence exerted by the wireless link quality on the throughput. On the other hand, the above dynamic model (Formula 2) has taken into consideration the influence exerted by the cross-traffic on the throughput.

In an actual mobile communication network, both the wireless link quality and the cross-traffic exert influences on the throughput. Therefore, it is considered as preferable to use a mathematical model which has taken into consideration both the influence exerted by the wireless link quality on the throughput and the influence exerted by the cross-traffic on the throughput.

Hence, the transmitting device 100 in accordance with the second exemplary embodiment uses such a model as the mathematical model which mixes the CQI linear model and the dynamic model (to be called hybrid model, hereinafter).

Next, the hybrid model will be explained in detail.

The hybrid model defines the right-hand term f(u) of Formula 2 denoting the dynamic model as in the following Formula 4.

[Formula 4]

$$f(u) = (aq + b)u$$

That is, the hybrid model is constructed by assuming that by the fluid corresponding to the data sent at the transmission rate u from the transmitting device 100 to the receiving device 200, the external force f(u) applied to the mobile body M1 in the moving direction is as great as in accordance with both the transmission rate u and the wireless link quality information q.

To make a more specific description, the hybrid model is constructed by assuming that the above external force f(u) is the product of the transmission rate u, and a polynomial function with the wireless link quality information q as a variable (a linear function or linear expression in this example).

However, in the mathematical models denoted by Formula 2 and Formula 4, among the four unknown constants D, K, a and b, independent constants are only three (one constant is subordinated to the other three constants). Therefore, it is possible to let K = 1. That is, the hybrid model is expressed as the following Formula 5. Here, let $v_0 = 0$.

[Formula 5]

$$D\frac{dv}{dt} + v = (aq + b)u$$

In this manner, it can be said that the hybrid model is expressed by an ordinary differential equation for the throughput v, having an inhomogeneous term of a function with the transmission rate u and the wireless link quality information q as respective variables. Here, the inhomogeneous term is the product of the transmission rate u, and a polynomial function with the wireless link quality information q as a variable (a linear function or linear expression in this example). Further, it can also be said that the hybrid model is constructed to let the inhomogeneous term express the external force f(u).

Here, if both sides of Formula 5 are divided by (aq + b), then the hybrid model is expressed also as Formula 6.

[Formula 6]

$$\frac{D}{aq+b}\frac{\mathrm{d}v}{\mathrm{d}t} + \frac{1}{aq+b}v = u$$

Formula 6 uses (D/(aq + b)) instead of D and (1/(aq + b)) instead of K, D and K being used in Formula 2, and lets f(u) = u. That is, it is also conceivable that the hybrid model is expressed by a function taking, as its variable, the wireless link quality information of each of the viscosity coefficient and elastic coefficient in the dynamic mode.

Hereinabove, the hybrid model, which is the mathematical model in accordance with the second exemplary embodiment, has been explained.

Next, a method will be explained for estimating D, a, and b which are the model parameters for specifying the hybrid model.

The method for estimating the model parameters D, a, and b may be either a method of analytically calculating the optimum solution such as the least-squares estimation method, or a method of estimating the model parameters by repetitive calculation such as the steepest descent method.

Hereinbelow, an example will be explained with respect to the method of estimating the model parameters D, a, and b by the least-squares estimation method.

First, Formula 5, which is expressed by a differential equation with respect to a continuous time, is rewritten to a difference equation. In this example, as shown in the following Formula 7, the calculation period (sampling interval) h is taken as a time interval (time step), and backward difference is used.

[Formula 7]

$$\frac{D}{2h}\left\{3v(k) - 4v(k-1) + v(k-2)\right\} + v(k) = \left\{aq(k) + b\right\}u(k)$$

Here, solving Formula 7 for v(k) obtains Formula 8.

[Formula 8]

$$v(k) = \frac{D}{3D+2h}\left\{4v(k-1) - v(k-2)\right\} + \frac{2ha}{3D+2h}q(k)u(k) + \frac{2hb}{3D+2h}u(k)$$

From Formula 8, φ(k) and θ are defined as by Formula 9 and Formula 10, respectively. Here, "X$^T$" denotes the transposed matrix of a matrix X. Further, φ(k) and θ are three-dimensional column vectors, respectively.

[Formula 9]

$$\phi(k) = \left[4v(k-1) - v(k-2), q(k)u(k), u(k)\right]^T$$

[Formula 10]

$$\theta = \frac{1}{3D+2h}\left[D, 2ha, 2hb\right]^T$$

Formula 8, which is a difference equation, can be expressed as shown in Formula 11 by using φ(k) and θ.

[Formula 11]

$$v(k) = \phi(k)^T \theta$$

According to Formula 11, it is possible to apply the least-squares estimation method to θ. By letting the θ estimated by the least-squares estimation method be $\theta_e$, it is possible to find $\theta_e$ by the following Formula 12. Here, $\Sigma(x)$ denotes the value of summating X for k (that is, the summation of X for every calculation period h). Further, $X^{-1}$ denotes the inverse matrix of the matrix X.

[Formula 12]

$$\theta_e = \left[ \sum \left\{ \phi(k)\phi(k)^T \right\} \right]^{-1} \left[ \sum \left\{ \phi(k)v(k) \right\} \right]$$

Then, by letting the estimated $\theta_e$ be $\theta_e = [\theta_1, \theta_2, \theta_3]$, the model parameters D, a, and b can be found by Formula 13, Formula 14, and Formula 15, respectively.

[Formula 13]

$$D = \frac{2h\theta_1}{1 - 3\theta_1}$$

[Formula 14]

$$a = \frac{\theta_2}{1 - 3\theta_1}$$

[Formula 15]

$$b = \frac{\theta_3}{1 - 3\theta_1}$$

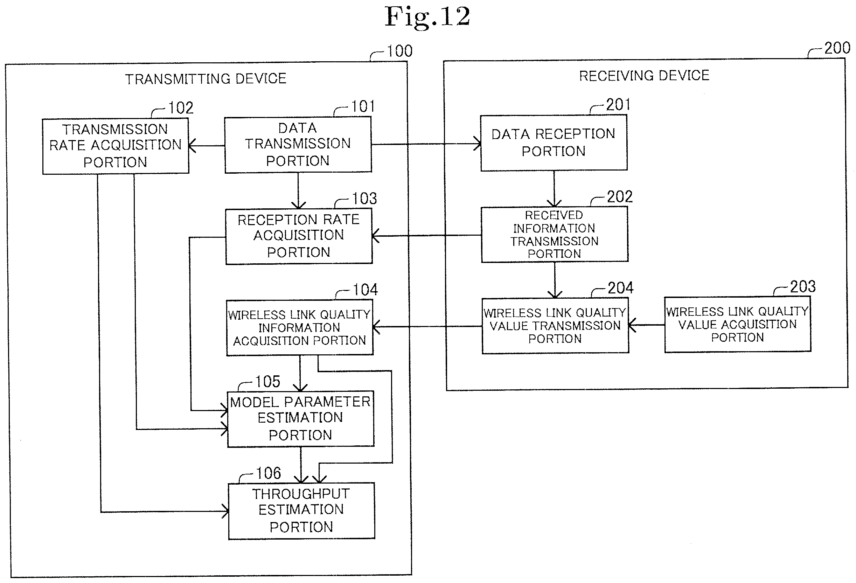

Further, as shown in Fig. 12, the function of the transmitting device 100 in accordance with the second exemplary embodiment includes a transmission rate acquisition portion (transmission rate acquisition means) 102, in addition to the function of the transmitting device 100 in accordance with the first exemplary embodiment.

Each time the calculation period h passes over, the transmission rate acquisition portion 102 calculates (acquires) the transmission rate which is the amount (size) of the data sent by the data transmission portion 101 to the receiving device 200 per unit time.

Then, the model parameter estimation portion 105 in accordance with the second exemplary embodiment calculates (estimates) the model parameters by using the least-squares estimation method as described before, based on the wireless link quality information (the smoothed CQI in this example) q(k) acquired by the wireless link quality information acquisition portion 104, the throughput (the estimated value of throughput) v(k) acquired by the reception rate acquisition portion 103, the transmission rate u(k) acquired by the transmission rate acquisition portion 102, and the aforementioned hybrid model.

Further, the throughput estimation portion 106 in accordance with the second exemplary embodiment estimates the throughput based on the mathematical model (hybrid model) specified by the model parameters estimated by the model parameter estimation portion 105, the wireless link quality information acquired by the wireless link quality information acquisition portion 104, and the transmission rate acquired by the transmission rate acquisition portion 102. In this example, the throughput estimation portion 106 estimates the throughput based on Formula 8.

As explained hereinabove, according to the transmitting device (throughput estimation device) 100 in accordance with the second exemplary embodiment of the present invention, it is possible to realize a similar function and effect to that of the transmitting device 100 in accordance with the first exemplary embodiment.

Further, the transmitting device 100 in accordance with the second exemplary embodiment estimates the throughput based on the mathematical model constructed by denoting the relation between the transmission rate and the throughput based on a dynamic model. By virtue of this, it is possible to estimate the throughput with an even higher accuracy when cross-traffic is present.

In addition, the transmitting device 100 in accordance with the second exemplary embodiment estimates the throughput based on the mathematical model constructed by denoting the relation between the transmission rate and the throughput based on a dynamic model including an elastic body and a viscous body.

Now, the elastic force of the elastic body denotes better the change of the transmission rate related to the cross-traffic, arising from the change of the transmission rate related to the self-traffic. Further, delay time is necessary from the transmitting device 100 changing the transmission rate related to the self-traffic to changing the transmission rate related to the cross-traffic. The resisting force of the viscous body denotes this delay time better. Therefore, according to the transmitting device 100 in accordance with the second exemplary embodiment, it is possible to estimate the throughput with an even higher accuracy when cross-traffic is present.

Next, the effect of the transmitting device 100 in accordance with the second exemplary embodiment will be explained more specifically through the results of the following simulations.

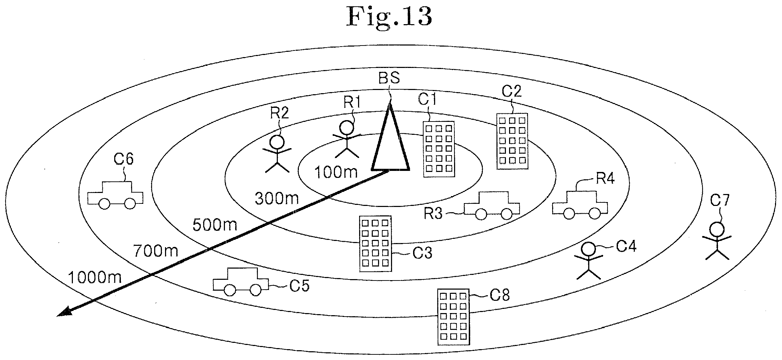

Fig. 13 is an explanatory diagram conceptually showing the contents of the simulations. In the simulations, a plurality of (in this example, 12) users R1 to R4 and C1 to C8 each hold one of mutually different receiving devices 200.

Each of the users R1 to R4 holds the receiving device 200 as the object of estimating the throughput. The user R1 is walking at a position 100 m away from the base station BS. The user R2 is walking at a position 300 m away from the base station BS. The user R3 rides in a car running at a position 300 m away from the base station BS. The user R4 rides in a car running at a position 500 m away from the base station BS.

Further, each of the users C1 to C8 holds the receiving device 200 receiving the cross-traffic. The user C1 is positioned in a building 100 m away from the base station BS. The user C2 is positioned in a building 300 m away from the base station BS. The user C3 is positioned in a building 500 m away from the base station BS.

The user C4 is walking at a position 700 m away from the base station BS. The user C5 rides in a car running at a position 700 m away from the base station BS. The user C6 rides in a car running at another position 700 m away from the base station BS. The user C7 is walking at a position 1000 m away from the base station BS. The user C8 is positioned in a building 1000 m away from the base station BS.

In this case, the longer the distance between the receiving device 200 and the base station BS, the worse (the lower) the wireless link quality. Further, the users who ride in moving cars have a lower wireless link quality than the users who are walking.

Further, in the simulations, the transmitting device 100 sent a data at a transmission rate with a preset pattern to each of the receiving devices 200 held by the users R1 to R4 via the base station BS.

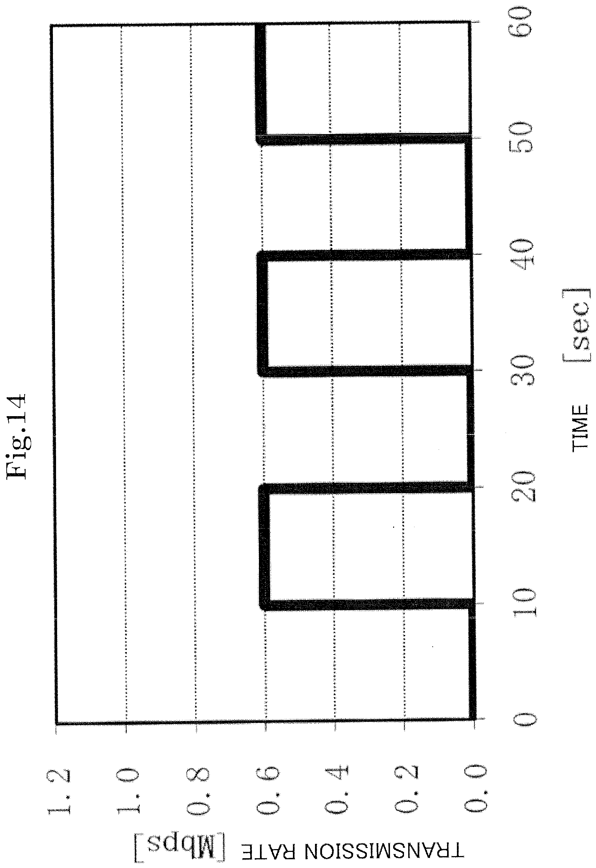

As shown in Fig. 14, the pattern is a rectangular wave which alternately repeats 0 Mbps and 0.6 Mbps for every ten minutes (0.8 Mbps only for the transmission to the receiving device 200 held by the user R2).

Further, the cross-traffic is sent according to FTP (File Transfer Protocol)/TCP. In this example, the cross-traffic is a traffic involving file download.

This time, four simulations were carried out.

In the first simulation, the receiving device 200 held by the user R1 is the object of estimating the throughput, and the cross-traffic is sent only to each of the receiving devices 200 held by the users C1 to C5.

In the second simulation, the receiving device 200 held by the user R2 is the object of estimating the throughput, and the cross-traffic is sent only to each of the receiving devices 200 held by the users C1 to C3.

In the third simulation, the receiving device 200 held by the user R3 is the object of estimating the throughput, and the cross-traffic is sent only to each of the receiving devices 200 held by the users C1 to C3.

In the fourth simulation, the receiving device 200 held by the user R4 is the object of estimating the throughput, and the cross-traffic is sent only to each of the receiving devices 200 held by the users C1 to C3.

Then, for each of the four simulations, the transmitting device 100 estimates the model parameters based on the acquired throughput (the estimated value of throughput), the acquired wireless link quality information (the smoothed CQI), and the mathematical model (hybrid model).

Further, for each of the four simulations, the transmitting device 100 estimates the throughput based on the mathematical model (hybrid model) specified by the estimated model parameters, the transmission rate, and the acquired wireless link quality information (the smoothed CQI).

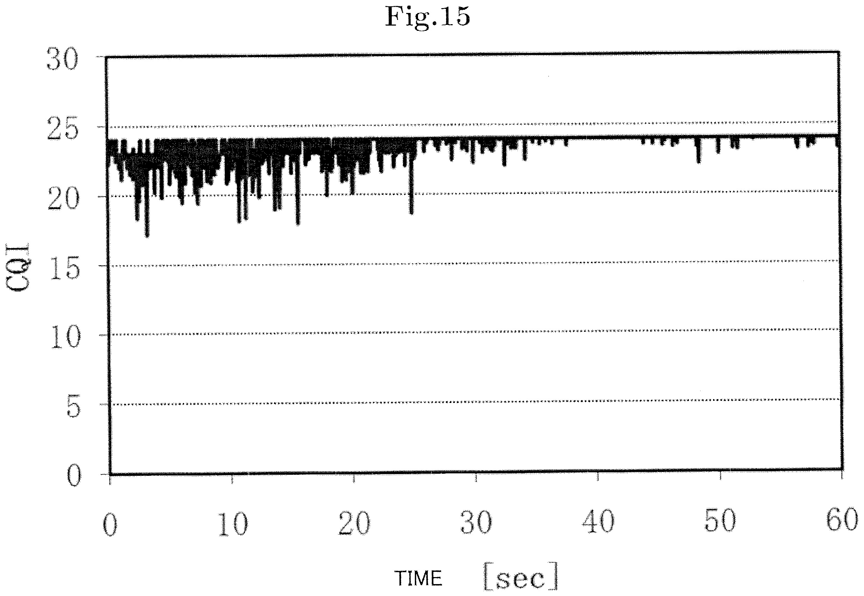

Fig. 15 is a graph showing a change with time in the value of wireless link quality (CQI in this example) denoting the quality of the wireless link established between the base station BS and the receiving device 200 held by the user R1. The CQI for the receiving device 200 held by the user R1 is vary high, and varies vary little with time (being very stable).

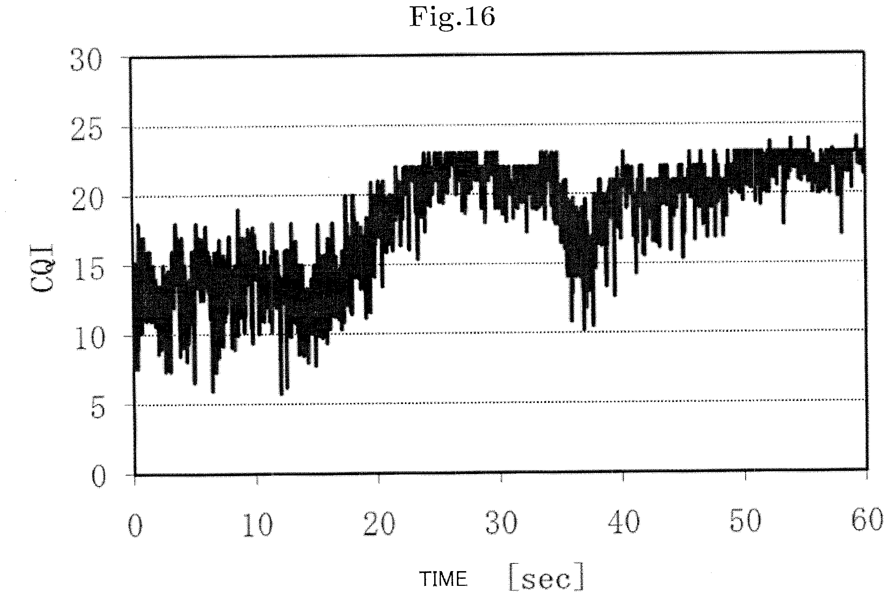

Fig. 16 is a graph showing a change with time in the value of wireless link quality denoting the quality of the wireless link established between the base station BS and the receiving device 200 held by the user R2. The CQI for the receiving device 200 held by the user R2 is comparatively high, and varies comparatively little with time (being comparatively stable).

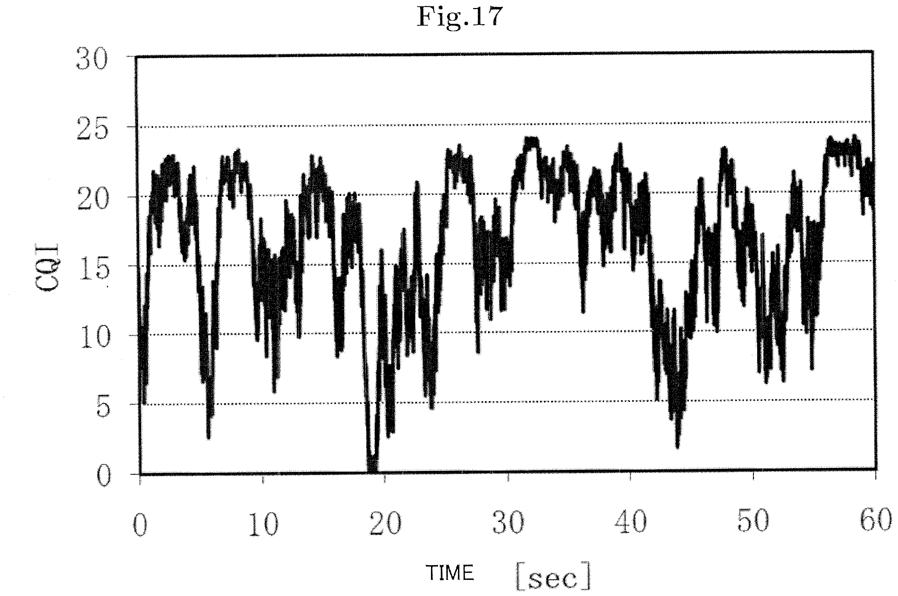

Fig. 17 is a graph showing a change with time in the value of wireless link quality denoting the quality of the wireless link established between the base station BS and the receiving device 200 held by the user R3. The CQI for the receiving device 200 held by the user R3 varies very greatly with time (being unstable), and its average value is about the same as that of the receiving device 200 held by the user R2.

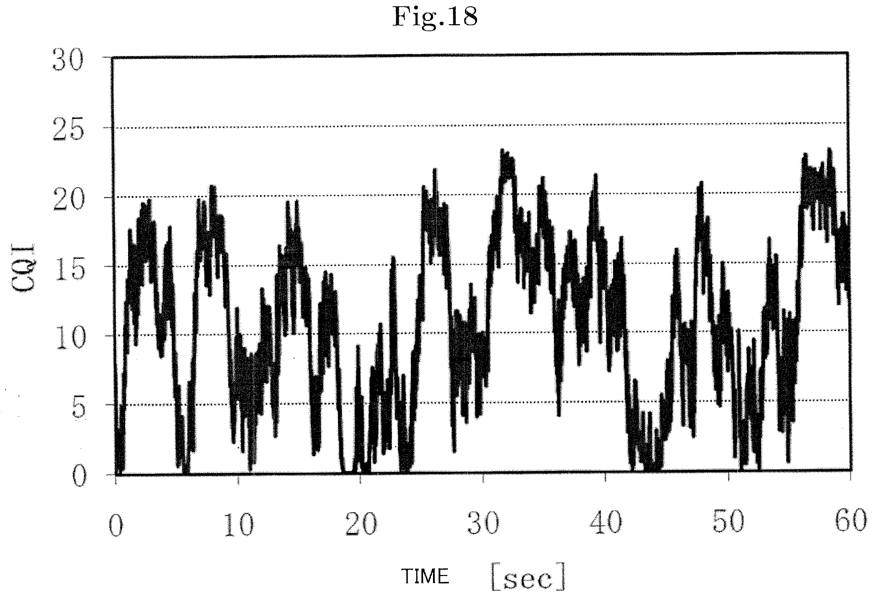

Fig. 18 is a graph showing a change with time in the value of wireless link quality denoting the quality of the wireless link established between the base station BS and the receiving device 200 held by the user R4. The CQI for the receiving device 200 held by the user R4 is very low, and varies very greatly with time (being unstable). That is, it can be said that this wireless link is very unstable.

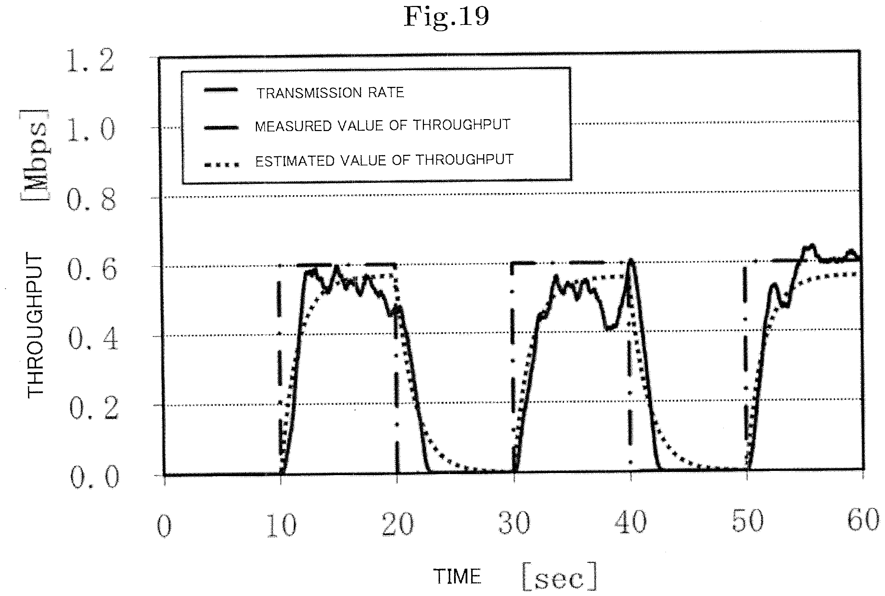

Fig. 19 is a graph showing the respective changes with time in the transmission rate, measured value of throughput, and estimated value of throughput (the throughput estimated by the transmitting device 100), in the first simulation. As shown in Fig. 15, because the value of wireless link quality is stable at a high value, the throughput is mainly under the influence of cross-traffic.

If the transmission rate is increased in a step-like manner (i.e., discontinuously), then with respect to the change of the transmission rate, the change of the throughput delays as long as the time required to push away the cross-traffic. That is, as shown in Fig. 19, the initial rise of the throughput draws a curve. The estimated value of the throughput is successfully reflecting this curve drawn by the measured value of the throughput.

Further, if the transmission rate is increased in a step-like manner, then even after the delay time is over, it is still impossible to push away all cross-traffic. That is, as shown in Fig. 19, the maximum value of the throughput is less than the maximum value of the transmission rate. The estimated value of the throughput is successfully reflecting that the maximum measured value of the throughput is less than the maximum value of the transmission rate.

In this manner, the transmitting device 100 can estimate the throughput with a high accuracy by using the hybrid model.

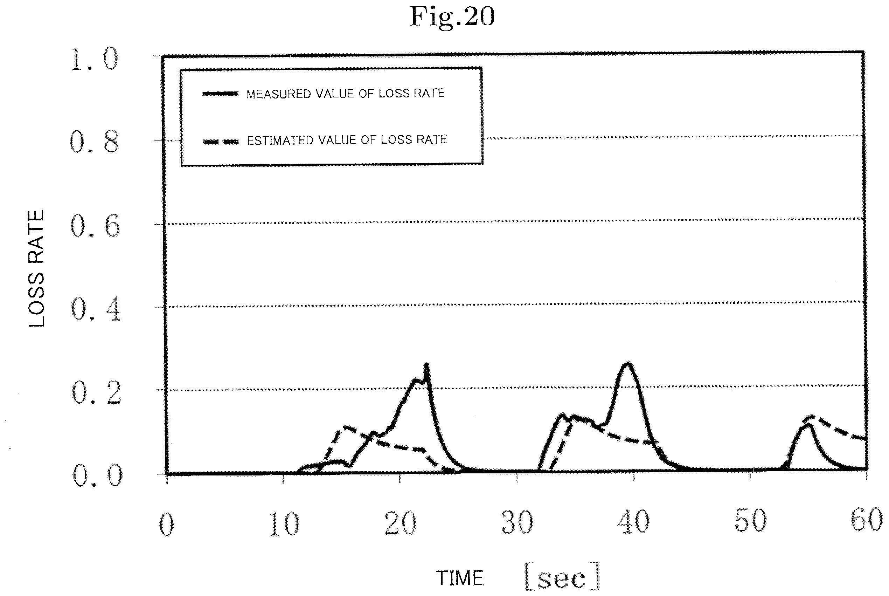

Fig. 20 is a graph showing the respective changes with time in the measured value of loss rate (packet loss rate) and estimated value of loss rate (the loss rate calculated based on the throughput estimated by the transmitting device 100), in the first simulation. In this manner, the transmitting device 100 can also estimate the loss rate with a high accuracy by using the hybrid model.

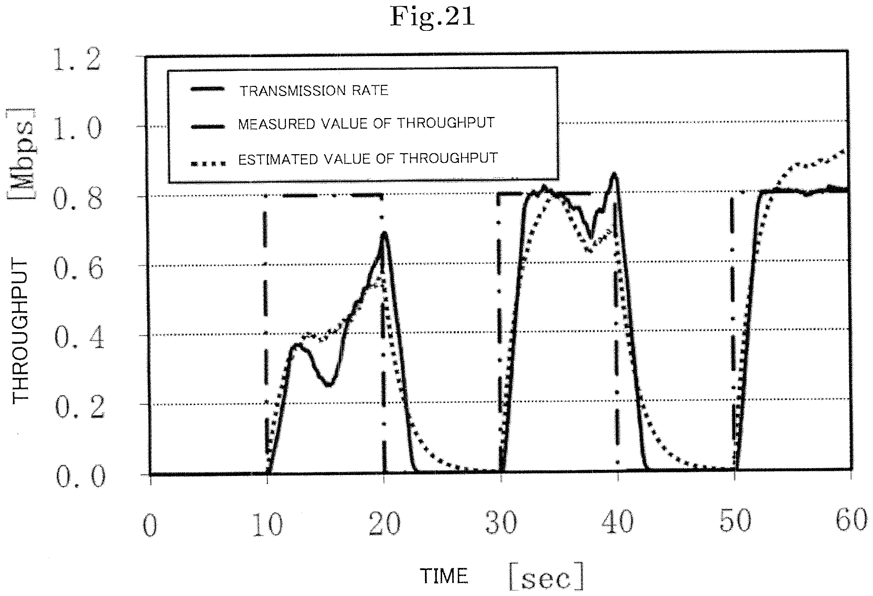

Fig. 21 is a graph showing the respective changes with time in the transmission rate, measured value of throughput, and estimated value of throughput in the second simulation. As shown in Fig. 16, because the value of wireless link quality varies to some extent, the throughput is also under a comparatively great influence of the wireless link quality in addition to the cross-traffic.

The influence exerted by the wireless link quality on the throughput is seen to be strong especially in the period of 10 to 20 seconds. During the period of 10 to 20 seconds, because the value of wireless link quality is comparatively low, the throughput is also comparatively low. On the other hand, during the period after 30 seconds, because the value of wireless link quality is stable at a comparatively high value, the throughput changes in the same manner as in the first simulation.

In this manner, in the second simulation, the throughput is under a comparatively great influence of both the wireless link quality and the cross-traffic. As shown in Fig. 21, in such case, too, the transmitting device 100 can still estimate the throughput with a high accuracy by using the hybrid model.

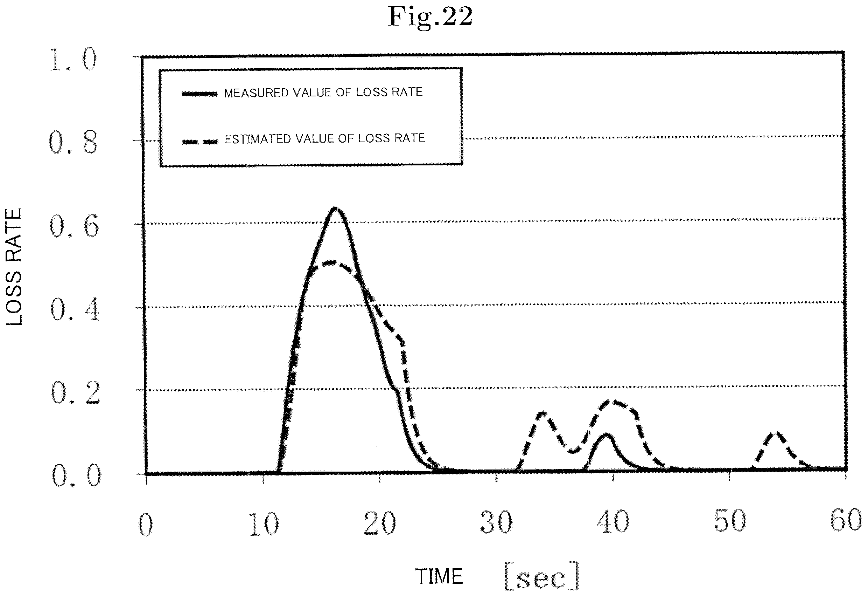

Fig. 22 is a graph showing the respective changes with time in the measured value of loss rate and estimated value of loss rate in the second simulation. In this manner, the transmitting device 100 can estimate the loss rate with a high accuracy by using the hybrid model, including the rapid increase in loss rate during the period of 10 to 20 seconds.

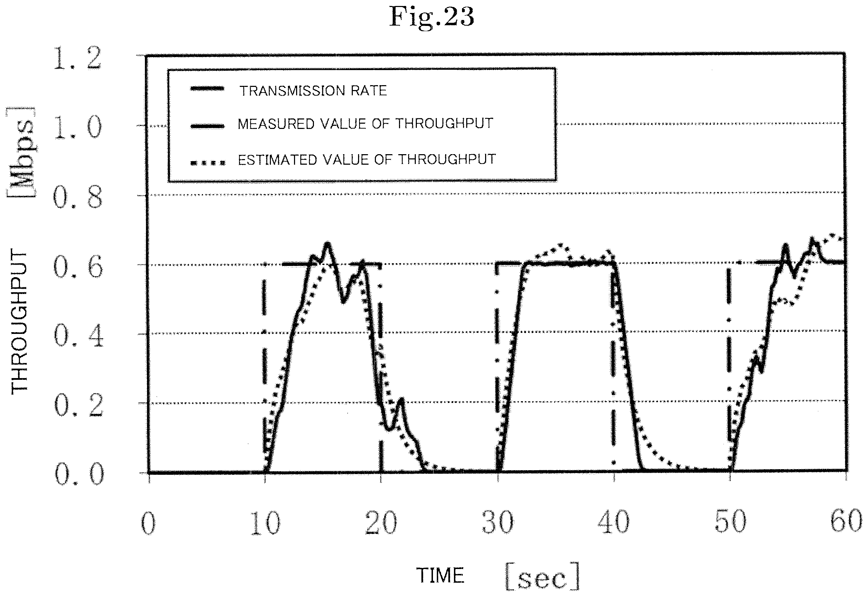

Fig. 23 is a graph showing the respective changes with time in the transmission rate, measured value of throughput, and estimated value of throughput in the third simulation. As shown in Fig. 17, because the value of wireless link quality varies very greatly, the throughput is under a comparatively great influence of the wireless link quality.

During the period of 10 to 20 seconds, and during the period of 50 to 60 seconds, there is a time when the wireless link quality decreases comparatively greatly. Due to this influence, there is a time when the throughput also decreases comparatively greatly. On the other hand, during the period of 30 to 40 seconds, because the wireless link quality is comparatively high, the throughput is mainly under the influence of the cross-traffic.

Thus, in the third simulation, the throughput is also under a comparatively great influence of both the wireless link quality and the cross-traffic. As shown in Fig. 23, in such case, too, the transmitting device 100 can still estimate the throughput with a high accuracy by using the hybrid model.

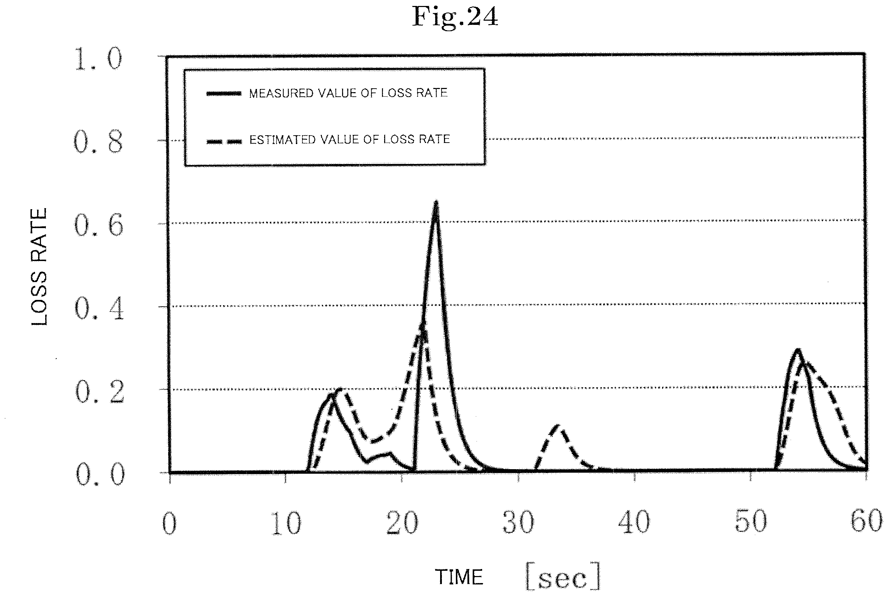

Fig. 24 is a graph showing the respective changes with time in the measured value of loss rate and estimated value of loss rate in the third simulation. In this manner, the transmitting device 100 can estimate the loss rate with a high accuracy by using the hybrid model, including the packet loss occurring when the wireless link quality decreases greatly.

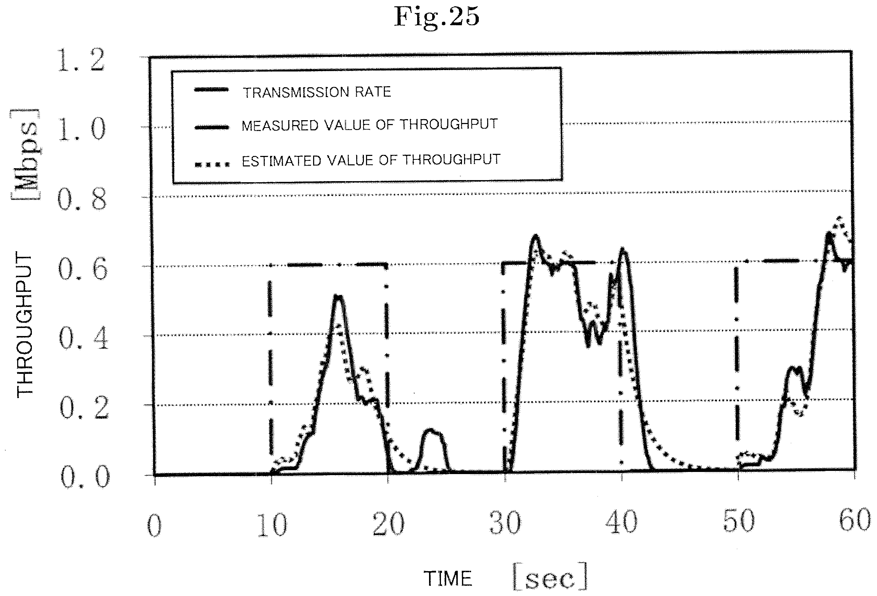

Fig. 25 is a graph showing the respective changes with time in the transmission rate, measured value of throughput, and estimated value of throughput in the fourth simulation. As shown in Fig. 18, because the value of wireless link quality varies very greatly, the throughput is under a comparatively great influence of the wireless link quality.

During the period when the wireless link quality is low, the throughput is also low. Thus, in the fourth simulation, the throughput is also under a comparatively great influence of both the wireless link quality and the cross-traffic. As shown in Fig. 25, in such case, too, the transmitting device 100 can still estimate the throughput with a high accuracy by using the hybrid model.

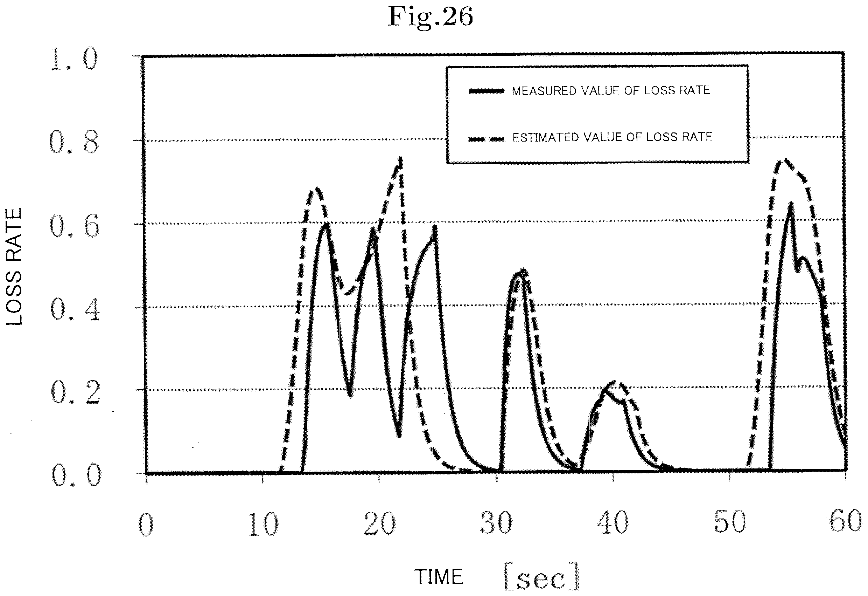

Fig. 26 is a graph showing the respective changes with time in the measured value of loss rate and estimated value of loss rate in the fourth simulation. In this manner, the transmitting device 100 can estimate the loss rate with a high accuracy by using the hybrid model, including the packet loss occurring when the wireless link quality decreases greatly.

In the above manner, from the simulation results, too, it becomes obvious that the transmitting device 100 in accordance with the second exemplary embodiment can estimate the throughput with a high accuracy when a data is sent via the wireless link when cross-traffic is present.

Further, while the mathematical model in the second exemplary embodiment is constructed by expressing the relationship between the throughput, the wireless link quality information, and the transmission rate based on a dynamic model, it may also be constructed by expressing this relationship based on another model (such as a thermal conduction model, fluid model, circuit model, or the like).

<A third exemplary embodiment>

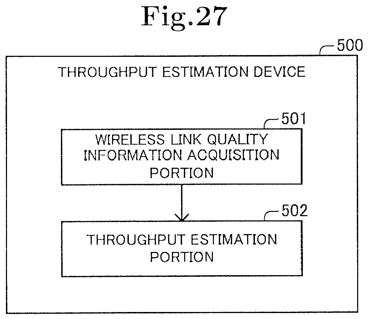

Next, referring to Fig. 27, a throughput estimation device in accordance with a third exemplary embodiment of the present invention will be explained.

A throughput estimation device 500 in accordance with the third exemplary embodiment includes a wireless link quality information acquisition portion (wireless link quality information acquisition means) 501 acquiring wireless link quality information denoting a quality of a wireless link established between a mobile station and a base station on a mobile communication network, and a throughput estimation portion (throughput estimation means) 502 estimating a throughput which is the amount for the mobile station to receive per unit time a data sent by a transmitting device connected communicably with the mobile station via the wireless link, based on the acquired wireless link quality information.

According to the third exemplary embodiment, it is possible to estimate the throughput with a high accuracy when a data is sent via the wireless link.

Hereinabove, the present invention is explained in reference to the above exemplary embodiments. However, the present invention is not limited to those exemplary embodiments. It is possible to apply various changes understandable by those skilled in the art to the configuration and details of the present invention within the scope of the present invention.

For example, while the transmitting device sending data to a receiving device constitutes the throughput estimation device in the above exemplary embodiments, the receiving device may instead constitute the throughput estimation device. Further, a device other than the receiving device and the transmitting device (the base station, a server device, or the like, for example) may instead constitute the throughput estimation device.

Further, while each function of the mobile communication system 1 in each of the above exemplary embodiments is realized by letting the CPU implement a computer program (software), it may alternatively be realized by hardware such as circuits and the like.

Further, while the computer program in each of the above exemplary embodiments is stored in a storage device, it may alternatively be stored in a recording medium readable by a computer. The recording medium is, for example, a portable medium such as a flexible disk, optical disk, magnetic optical disk, semiconductor memory, or the like.

Further, as other modifications of the above exemplary embodiments, it is possible to adopt any combinations of the above exemplary embodiments and modifications.

<Supplementary Notes>

The whole or part of the exemplary embodiments disclosed above can be described as, but not limited to, the following supplementary notes.

(Supplementary Note 1)

A throughput estimation device comprising:

a wireless link quality information acquisition means for acquiring wireless link quality information denoting a quality of a wireless link established between a mobile station and a base station on a mobile communication network; and a throughput estimation means for estimating a throughput which is the amount for the mobile station to receive per unit time a data sent by a transmitting device connected communicably with the mobile station via the wireless link, based on the acquired wireless link quality information.

According to this throughput estimation device, it is possible to estimate the throughput with a high accuracy when a data is sent via the wireless link.

(Supplementary Note 2)

The throughput estimation device according to Supplementary Note 1, wherein the throughput estimation means is configured to estimate the throughput based on a mathematical model denoting a relationship between the throughput and the wireless link quality information, and on the acquired wireless link quality information.

(Supplementary Note 3)

The throughput estimation device according to Supplementary Note 2, wherein the mathematical model is constructed by assuming equality between the through put and a polynomial function with the wireless link quality information as a variable.
Now, there is a comparatively strong correlation between the throughput and the polynomial function with the wireless link quality information as a variable. Therefore, by configuring the throughput estimation device in the above manner, it is possible to estimate the throughput with an even higher accuracy when a data is sent via the wireless link.

(Supplementary Note 4)

The throughput estimation device according to Supplementary Note 3, wherein the mathematical model is constructed by assuming equality between the throughput and a linear function with the wireless link quality information as a variable.
Now, there is a comparatively strong correlation between the throughput and the linear function with the wireless link quality information as a variable. Therefore, by configuring the throughput estimation device in the above manner, it is possible to estimate the throughput with an even higher accuracy when a data is sent via the wireless link.

(Supplementary Note 5)

The throughput estimation device according to Supplementary Note 2, further comprising a transmission rate acquisition means for acquiring a transmission rate which is the amount of the data sent by the transmitting device to the mobile station per unit time, wherein the throughput estimation means is configured to estimate the throughput based on the mathematical model denoting the relationship between the throughput, the wireless link quality information and the transmission rate, on the acquired transmission rate, and on the acquired wireless link quality information.
If the communication bandwidth used by self-traffic changes, then the transmission rate for cross-traffic also changes. Here, the self-traffic is the data sent from the transmitting device to the mobile device. Further, the cross-traffic is the data sent by using a communication pathway sharing at least part of a pathway with the communication pathway from the transmitting device to the mobile station.
Now, there is a comparatively strong correlation between the throughput, wireless link quality information and transmission rate for the self-traffic. Therefore, by configuring the throughput estimation device in the above manner, it is possible to estimate the throughput with an even higher accuracy when the cross-traffic is present.

(Supplementary Note 6)

The throughput estimation device according to Supplementary Note 5, wherein the mathematical model is expressed by an ordinary differential equation for the throughput with an inhomogeneous term of a function taking each of the transmission rate and the wireless link quality information as its variable.

(Supplementary Note 7)

The throughput estimation device according to Supplementary Note 6, wherein the inhomogeneous term is a product of the transmission rate and the polynomial function with the wireless link quality information as a variable.

(Supplementary Note 8)

The throughput estimation device according to Supplementary Note 7, wherein the inhomogeneous term is a product of the transmission rate and the linear function with the wireless link quality information as a variable.

(Supplementary Note 9)

The throughput estimation device according to any one of Supplementary Notes 5 to 8, wherein the mathematical model is constructed by expressing the relationship between the throughput, the wireless link quality information and the transmission rate based on a dynamic model.
Now, the dynamic model successfully expresses the relationship between the throughput, the wireless link quality information and the transmission rate for the self-traffic. Therefore, by configuring the throughput estimation device in the above manner, it is possible to estimate the throughput with an even higher accuracy when the cross-traffic is present.

(Supplementary Note 10)

The throughput estimation device according to Supplementary Note 9, wherein the dynamic model comprises a mobile body movable in a preset moving direction; and at least one of an elastic body deforming in the moving direction as much as the displacement of the mobile body in the moving direction, and a viscous body delaying the movement of the mobile body in the moving direction.
Now, the elastic force of the elastic body denotes better the change of the transmission rate related to the cross-traffic, arising from the change of the transmission rate related to the self-traffic. Therefore, by configuring the throughput estimation device in the above manner, it is possible to estimate the throughput with an even higher accuracy when the cross-traffic is present.
Further, delay time is necessary from the transmitting device changing the transmission rate related to the self-traffic to changing the transmission rate related to the cross-traffic. The resisting force of the viscous body denotes this delay time better. Therefore, by configuring the throughput estimation device in the above manner, it is possible to estimate the throughput with an even higher accuracy when the cross-traffic is present.

(Supplementary Note 11)

The throughput estimation device according to Supplementary Note 10, wherein the mathematical model is constructed by assuming that an external force applied to the mobile body in the moving direction is as great as in accordance with the transmission rate and the wireless link quality information, and by assuming that the throughput is the distance in the moving direction between a preset reference position and the position of the mobile body.

(Supplementary Note 12)

The throughput estimation device according to Supplementary Note 11, wherein the mathematical model is constructed to let the inhomogeneous term express the external force.

(Supplementary Note 13)

The throughput estimation device according to any one of Supplementary Notes 10 to 12, wherein the mathematical model is constructed by assuming that an elastic force generated by the elastic body is as great as the value of the displacement of the mobile body from a force-free position which is the position of the mobile body with the elastic force being zero, multiplied by an elastic coefficient which is a proportionality coefficient, and the elastic force acts in the opposite direction to the direction in which the mobile body has moved from the force-free position.

(Supplementary Note 14)

The throughput estimation device according to any one of Supplementary Notes 10 to 13, wherein the mathematical model is constructed by assuming that a resisting force generated by the viscous body is as great as the velocity of the mobile body moving in the moving direction, multiplied by a viscosity coefficient which is another proportionality coefficient, and the resisting force acts in the opposite direction to the direction in which the mobile body moves.

(Supplementary Note 15)

The throughput estimation device according to any one of Supplementary Notes 1 to 14, further comprising: a throughput acquisition means for acquiring the throughout, and a model parameter estimation means for estimating a model parameter for specifying the mathematical model, based on the acquired throughput and the acquired wireless link quality information.

(Supplementary Note 16)

The throughput estimation device according to any one of Supplementary Notes 1 to 15, wherein the wireless link quality information is a value based on a channel quality indicator (CQI).

(Supplementary Note 17)

The throughput estimation device according to Supplementary Note 16, wherein the wireless link quality information is a value of having put the channel quality indicator through a smoothing process.

(Supplementary Note 18)

A throughput estimation method comprising:

acquiring wireless link quality information denoting a quality of a wireless link established between a mobile station and a base station on a mobile communication network; and
estimating a throughput which is the amount for the mobile station to receive per unit time a data sent by a transmitting device connected communicably with the mobile station via the wireless link, based on the acquired wireless link quality information.

(Supplementary Note 19)

The throughput estimation method according to Supplementary Note 18, wherein the throughput is estimated based on a mathematical model denoting a relationship between the throughput and the wireless link quality information, and on the acquired wireless link quality information.

(Supplementary Note 20)

The throughput estimation method according to Supplementary Note 19, wherein the mathematical model is constructed by assuming equality between the throughput and a polynomial function with the wireless link quality information as a variable.

(Supplementary Note 21)

The throughput estimation method according to Supplementary Note 19, further comprising acquiring a transmission rate which is the amount of the data sent by the transmitting device to the mobile station per unit time, wherein the throughput is estimated based on the mathematical model denoting the relationship between the throughput, the wireless link quality information and the transmission rate, on the acquired transmission rate, and on the acquired wireless link quality information.

(Supplementary Note 22)

A throughput estimation computer program comprising instructions for causing an information processing device to carry out a process comprising the steps of:

acquiring wireless link quality information denoting a quality of a wireless link established between a mobile station and a base station on a mobile communication network; and

estimating a throughput which is the amount for the mobile station to receive per unit time a data sent by a transmitting device connected communicably with the mobile station via the wireless link, based on the acquired wireless link quality information.

(Supplementary Note 23)

The throughput estimation computer program according to Supplementary Note 22, wherein it is configured to cause the information processing device to carry out the process of estimating the throughput based on a mathematical model denoting a relationship between the throughput and the wireless link quality information, and on the acquired wireless link quality information.

(Supplementary Note 24)

The throughput estimation computer program according to Supplementary Note 23, wherein the mathematical model is constructed by assuming equality between the throughput and a polynomial function with the wireless link quality information as a variable.

(Supplementary Note 25)

The throughput estimation computer program according to Supplementary Note 23, wherein it is configured to cause the information processing device to carry out the process further comprising the step of acquiring a transmission rate which is the amount of the data sent by the transmitting device to the mobile station per unit time, and estimating the throughput based on the mathematical model denoting the relationship between the throughput, the wireless link quality information and the transmission rate, on the acquired transmission rate, and on the acquired wireless link quality information.

INDUSTRIAL APPLICABILITY

The present invention is applicable to throughput estimation devices and the like to estimate throughput.

REFERENCE SIGNS LIST

| | |
|---|---|
| 1 | Mobile communication system |
| 100 | Transmitting device (Throughput estimation device) |
| 101 | Data transmission portion |
| 102 | Transmission rate acquisition portion |
| 103 | Reception rate acquisition portion |
| 104 | Wireless link quality information acquisition portion |
| 105 | Model parameter estimation portion |
| 106 | Throughput estimation portion |
| 200 | Receiving device (Mobile station) |
| 201 | Data reception portion |
| 202 | Received information transmission portion |
| 203 | Wireless link quality value acquisition portion |
| 204 | Wireless link quality value transmission portion |
| 500 | Throughput estimation device |
| 501 | Wireless link quality information acquisition portion |
| 502 | Throughput estimation portion |
| BS | Base station |

M1        Mobile body
M2, M4    Springs
M3, M5    Dashpots
W1        First wall surface
W2        Second wall surface

**Claims**

1.  A throughput estimation device (100) comprising:

    a wireless link quality information acquisition means (104) for acquiring wireless link quality information denoting a quality of a wireless link established between a mobile station (200) and a base station on a mobile communication network; and
    a throughput estimation means (106) for estimating a throughput which is the amount for the mobile station (200) to receive per unit time a data sent by a transmitting device (100) connected communicably with the mobile station via the wireless link, based on the acquired wireless link quality information, wherein:

    the throughput estimation means (106) is configured to estimate the throughput based on a mathematical model denoting a relationship between the throughput and the wireless link quality information, and on the acquired wireless link quality information;
    a transmission rate acquisition means (102) for acquiring a transmission rate which is the amount of the data sent by the transmitting device (100) to the mobile station (200) per unit time is comprised; and
    the throughput estimation means (106) is configured to estimate the throughput based on the mathematical model denoting the relationship between the throughput, the wireless link quality information and the transmission rate, on the acquired transmission rate, and on the acquired wireless link quality information.

2.  The throughput estimation device (100) according to Claim 1, wherein the mathematical model is constructed by assuming equality between the throughput and a polynomial function with the wireless link quality information as a variable.

3.  The throughput estimation device (100) according to Claim 2, wherein the mathematical model is constructed by assuming equality between the throughput and a linear function with the wireless link quality information as a variable.

4.  The throughput estimation device (100) according to Claim 1, wherein the mathematical model is expressed by an ordinary differential equation for the throughput with an inhomogeneous term of a function taking each of the transmission rate and the wireless link quality information as its variable.

5.  The throughput estimation device (100) according to Claim 4, wherein the inhomogeneous term is a product of the transmission rate and the polynomial function with the wireless link quality information as a variable.

6.  The throughput estimation device (100) according to Claim 5, wherein the inhomogeneous term is a product of the transmission rate and the linear function with the wireless link quality information as a variable.

7.  The throughput estimation device (100) according to any one of Claims 1 and 4 to 6, wherein the mathematical model is constructed by expressing the relationship between the throughput, the wireless link quality information and the transmission rate based on a dynamic model.

8.  The throughput estimation device (100) according to Claim 7, wherein the dynamic model comprises a mobile body movable in a preset moving direction; and at least one of an elastic body deforming in the moving direction as much as the displacement of the mobile body in the moving direction, and a viscous body delaying the movement of the mobile body in the moving direction.

9.  The throughput estimation device (100) according to Claim 8, wherein the mathematical model is constructed by assuming that an external force applied to the mobile body in the moving direction is as great as in accordance with the transmission rate and the wireless link quality information, and by assuming that the throughput is the distance in the moving direction between a preset reference position and the position of the mobile body.

10. The throughput estimation device (100) according to Claim 9, wherein the mathematical model is constructed to let the inhomogeneous term express the external force.

11. The throughput estimation device (100) according to any one of Claims 8 to 10, wherein the mathematical model is constructed by assuming that an elastic force generated by the elastic body is as great as the value of the displacement of the mobile body from a force-free position which is the position of the mobile body with the elastic force being zero, multiplied by an elastic coefficient which is a proportionality coefficient, and the elastic force acts in the opposite direction to the direction in which the mobile body has moved from the force-free position.

12. The throughput estimation device (100) according to any one of Claims 8 to 11, wherein the mathematical model is constructed by assuming that a resisting force generated by the viscous body is as great as the velocity of the mobile body moving in the moving direction, multiplied by a viscosity coefficient which is another proportionality coefficient, and the resisting force acts in the opposite direction to the direction in which the mobile body moves.

13. The throughput estimation device (100) according to any one of Claims 1 to 12, further comprising: a throughput acquisition means for acquiring the throughout, and a model parameter estimation means for estimating a model parameter for specifying the mathematical model, based on the acquired throughput and the acquired wireless link quality information.

14. The throughput estimation device (100) according to any one of Claims 1 to 13, wherein the wireless link quality information is a value based on a channel quality indicator (CQI).

15. The throughput estimation device according to Claim 14, wherein the wireless link quality information is a value of having put the channel quality indicator through a smoothing process.

16. A throughput estimation method comprising:

acquiring wireless link quality information denoting a quality of a wireless link established between a mobile station (200) and a base station on a mobile communication network;
estimating a throughput which is the amount for the mobile station (200) to receive per unit time a data sent by a transmitting device connected communicably with the mobile station (200) via the wireless link, based on the acquired wireless link quality information;
estimating the throughput based on a mathematical model denoting a relationship between the throughput and the wireless link quality information, and on the acquired wireless link information;
acquiring a transmission rate which is the amount of the data sent by the transmitting device (100) to the mobile station (200) per unit time; and
estimating the throughput based on the mathematical model denoting the relationship between the throughput, the wireless link quality information and the transmission rate, on the acquired transmission rate, and on the acquired wireless link quality information.

17. The throughput estimation method according to Claim 16, wherein the throughput is estimated based on a mathematical model denoting a relationship between the throughput and the wireless link quality information, and on the acquired wireless link quality information.

18. The throughput estimation method according to Claim 17, wherein the mathematical model is constructed by assuming equality between the throughput and a polynomial function with the wireless link quality information as a variable.

19. The throughput estimation method according to Claim 17, further comprising acquiring a transmission rate which is the amount of the data sent by the transmitting device to the mobile station per unit time, wherein the throughput is estimated based on the mathematical model denoting the relationship between the throughput, the wireless link quality information and the transmission rate, on the acquired transmission rate, and on the acquired wireless link quality information.

20. A throughput estimation computer program comprising instructions for causing an information processing device to carry out a process according to the steps of the method according to any one of claims 16 to 19.

**Patentansprüche**

1. Durchsatzschätzvorrichtung (100) mit:

   einer Drahtlosverbindungsqualitätsinformationserfassungseinrichtung (104) zum Erfassen von Drahtlosverbindungsqualitätsinformation, die die Qualität einer Drahtlosverbindung anzeigt, die zwischen einer Mobilstation (200) und einer Basisstation in einem Mobilkommunikationsnetzwerk eingerichtet ist; und
   einer Durchsatzschätzeinrichtung (106) zum Schätzen eines Durchsatzes, der die Datenmenge angibt, die die Mobilstation (200) pro Zeiteinheit empfängt und die von einer Übertragungseinrichtung (100) übertragen wurde, die über die Drahtlosverbindung kommunikativ mit der Mobilstation verbunden ist, basierend auf der erfassten Drahtlosverbindungsqualitätsinformation, wobei:

   die Durchsatzschätzeinrichtung (106) dafür konfiguriert ist, den Durchsatz basierend auf einem mathematischen Modell, das eine Beziehung zwischen dem Durchsatz und der Drahtlosverbindungsqualitätsinformation anzeigt, und basierend auf der Drahtlosverbindungsqualitätsinformation zu schätzen,
   eine Übertragungsratenerfassungseinrichtung (102) zum Erfassen einer Übertragungsrate vorgesehen ist, die die durch die Übertragungseinrichtung (100) an die Mobilstation (200) übertragene Datenmenge pro Zeiteinheit angibt, und
   die Durchsatzschätzeinrichtung (106) dafür konfiguriert ist, den Durchsatz basierend auf dem mathematischen Modell, das die Beziehung zwischen dem Durchsatz, der Drahtlosverbindungsqualitätsinformation und der Übertragungsrate anzeigt, auf der erfassten Übertragungsrate und auf der erfassten Drahtlosverbindungsqualitätsinformation zu schätzen.

2. Durchsatzschätzvorrichtung (100) nach Anspruch 1, wobei das mathematische Modell unter der Annahme einer Gleichheit zwischen dem Durchsatz und einer Polynomfunktion mit der Drahtlosverbindungsqualitätsinformation als eine Variable konstruiert ist.

3. Durchsatzschätzvorrichtung (100) nach Anspruch 2, wobei das mathematische Modell unter der Annahme einer Gleichheit zwischen dem Durchsatz und einer linearen Funktion mit der Drahtlosverbindungsqualitätsinformation als eine Variable konstruiert ist.

4. Durchsatzschätzvorrichtung (100) nach Anspruch 1, wobei das mathematische Modell durch eine gewöhnliche Differentialgleichung für den Durchsatz mit einem inhomogenen Ausdruck einer Funktion dargestellt ist, die die Übertragungsrate und die Drahtlosverbindungsqualitätsinformation als eine Variable verwendet.

5. Durchsatzschätzvorrichtung (100) nach Anspruch 4, wobei der inhomogene Ausdruck ein Produkt aus der Übertragungsrate und der Polynomfunktion mit der Drahtlosverbindungsqualitätsinformation als eine Variable ist.

6. Durchsatzschätzvorrichtung (100) nach Anspruch 5, wobei der inhomogene Ausdruck ein Produkt aus der Übertragungsrate und der linearen Funktion mit der Drahtlosverbindungsqualitätsinformation als eine Variable ist.

7. Durchsatzschätzvorrichtung (100) nach einem der Ansprüche 1 und 4 bis 6, wobei das mathematische Modell durch Ausdrücken der Beziehung zwischen dem Durchsatz, der Drahtlosverbindungsqualitätsinformation und der Übertragungsrate basierend auf einem dynamischen Modell konstruiert ist.

8. Durchsatzschätzvorrichtung (100) nach Anspruch 7, wobei das dynamische Modell einen beweglichen Körper, der in einer voreingestellten Bewegungsrichtung beweglich ist, und mindestens einen Körper unter einem elastischen Körper, der sich in der Bewegungsrichtung so stark verformt, wie es der Verschiebung des beweglichen Körpers in der Bewegungsrichtung entspricht, und einem viskosen Körper aufweist, der die Bewegung des beweglichen Körpers in der Bewegungsrichtung verzögert.

9. Durchsatzschätzvorrichtung (100) nach Anspruch 8, wobei das mathematische Modell unter der Annahme konstruiert ist, dass eine auf den mobilen Körper in der Bewegungsrichtung ausgeübte externe Kraft so groß ist, wie es der Übertragungsrate und der Drahtlosverbindungsqualitätsinformation entspricht, und unter der Annahme, dass der Durchsatz dem Abstand zwischen einer voreingestellten Referenzposition und der Position des beweglichen Körpers in der Bewegungsrichtung entspricht.

10. Durchsatzschätzvorrichtung (100) nach Anspruch 9, wobei das mathematische Modell derart konstruiert ist, dass der inhomogene Ausdruck die äußere Kraft darstellt.

11. Durchsatzschätzvorrichtung (100) nach einem der Ansprüche 8 bis 10, wobei das mathematische Modell unter der Annahme konstruiert ist, dass eine durch den elastischen Körper erzeugte elastische Kraft so groß ist wie der Wert der Verschiebung des beweglichen Körpers von einer kraftfreien Position, die die Position des beweglichen Körpers ist, bei der die elastische Kraft Null ist, multipliziert mit einem Elastizitätskoeffizienten, der ein Proportionalitätskoeffizient ist, und die elastische Kraft in einer Richtung wirkt, die der Richtung entgegengesetzt ist, in die sich der bewegliche Körper von der kraftfreien Position weg bewegt hat.

12. Durchsatzschätzvorrichtung (100) nach einem der Ansprüche 8 bis 11, wobei das mathematische Modell unter der Annahme konstruiert ist, dass eine durch den viskosen Körper erzeugte Widerstandskraft so groß ist wie die Geschwindigkeit des sich in der Bewegungsrichtung bewegenden beweglichen Körpers, multipliziert mit einem Viskositätskoeffizienten, der ein anderer Proportionalitätskoeffizient ist, und die Widerstandskraft in eine Richtung wirkt, die der Richtung entgegengesetzt ist, in die sich der bewegliche Körper bewegt.

13. Durchsatzschätzvorrichtung (100) nach einem der Ansprüche 1 bis 12, ferner mit: einer Durchsatzerfassungseinrichtung zum Erfassen des Durchsatzes und einer Modellparameterschätzeinrichtung zum Schätzen eines Modellparameters zum Spezifizieren des mathematischen Modells basierend auf dem erfassten Durchsatz und der erfassten Drahtlosverbindungsqualitätsinformation.

14. Durchsatzschätzvorrichtung (100) nach einem der Ansprüche 1 bis 13, wobei die Drahlosverbindungsqualitätsinformation ein auf einem Kanalqualitätsindikator (CQI) basierender Wert ist.

15. Durchsatzschätzvorrichtung nach Anspruch 14, wobei die Drahtlosverbindungsqualitätsinformation ein Wert ist, der erhalten wird, nachdem der Kanalqualitätsindikator einer Glättungsverarbeitung unterzogen wurde.

16. Durchsatzschätzverfahren mit den Schritten:

   Erfassen von Drahtlosverbindungsqualitätsinformation, die die Qualität einer Drahtlosverbindung anzeigt, die zwischen einer Mobilstation (200) und einer Basisstation in einem Mobilkommunikationsnetzwerk eingerichtet ist;
   Schätzen eines Durchsatzes, der die Datenmenge darstellt, die durch die Mobilstation (200) pro Zeiteinheit empfangen wird und die durch eine Übertragungseinrichtung übertragen wird, die mit der Mobilstation (200) über die Drahtlosverbindung kommunikativ verbunden ist, basierend auf der erfassten Drahtlosverbindungsqualitätsinformation;
   Schätzen des Durchsatzes basierend auf einem mathematischen Modell, das eine Beziehung zwischen dem Durchsatz und der Drahtlosverbindungsqualitätsinformation darstellt, und auf der erfassten Drahtlosverbindungsinformation;
   Erfassen einer Übertragungsrate, die die durch die Übertragungseinrichtung (100) an die Mobilstation (200) pro Zeiteinheit übertragene Datenmenge ist; und
   Schätzen des Durchsatzes basierend auf dem mathematischen Modell, das die Beziehung zwischen dem Durchsatz, der Drahtlosverbindungsqualitätsinformation und der Übertragungsrate darstellt, auf der erfassten Übertragungsrate und auf der erfassten Drahtlosverbindungsqualitätsinformation.

17. Durchsatzschätzverfahren nach Anspruch 16, wobei der Durchsatz basierend auf einem mathematischen Modell, das eine Beziehung zwischen dem Durchsatz und der Drahtlosverbindungsqualitätsinformation darstellt, und auf der erfassten Drahtlosverbindungsqualitätsinformation geschätzt wird.

18. Durchsatzschätzverfahren nach Anspruch 17, wobei das mathematische Modell unter der Annahme einer Gleichheit zwischen dem Durchsatz und einer Polynomfunktion mit der Drahtlosverbindungsqualitätsinformation als eine Variable konstruiert ist.

19. Durchsatzschätzverfahren nach Anspruch 17, ferner mit dem Erfassen einer Übertragungsrate, die die Datenmenge ist, die durch die Übertragungseinrichtung pro Zeiteinheit an die Mobilstation übertragen wird, wobei der Durchsatz basierend auf dem mathematischen Modell, das die Beziehung zwischen dem Durchsatz, der Drahtlosverbindungsqualitätsinformation und der erfassten Übertragungsrate darstellt, auf der erfassten Übertragungsrate und auf der erfassten Drahtlosverbindungsqualitätsinformation geschätzt wird.

**20.** Computerprogramm zur Durchsatzschätzung mit Anweisungen, die eine Informationsverarbeitungsvorrichtung veranlassen, einen Prozess gemäß den Schritten des Verfahrens nach einem der Ansprüche 16 bis 19 auszuführen.

**Revendications**

**1.** Dispositif d'estimation de débit (100), comprenant :

un moyen d'acquisition d'informations de qualité de liaison sans fil (104) pour acquérir des informations de qualité de liaison sans fil représentant une qualité d'une liaison sans fil établie entre une station mobile (200) et une station de base sur un réseau de communication mobile ; et
un moyen d'estimation de débit (106) pour estimer un débit qui est la quantité pour que la station mobile (200) reçoive par temps unitaire une donnée envoyée par un dispositif de transmission (100) relié de manière communicante à la station mobile par l'intermédiaire de la liaison sans fil, sur la base des informations de qualité de liaison sans fil acquises, dans lequel :

le moyen d'estimation de débit (106) est configuré pour estimer le débit sur la base d'un modèle mathématique représentant une relation entre le débit et les informations de qualité de liaison sans fil, et des informations de qualité de liaison sans fil acquises ;
un moyen d'acquisition de vitesse de transmission (102) pour acquérir une vitesse de transmission qui est la quantité des données envoyées par le dispositif de transmission (100) à la station mobile (200) par temps unitaire est compris; et
le moyen d'estimation de débit (106) est configuré pour estimer le débit sur la base du modèle mathématique représentant la relation entre le débit, les informations de qualité de liaison sans fil et la vitesse de transmission, de la vitesse de transmission acquise, et des informations de qualité de liaison sans fil acquises.

**2.** Dispositif d'estimation de débit (100) selon la revendication 1, dans lequel le modèle mathématique est construit en supposant une égalité entre le débit et une fonction polynomiale, avec les informations de qualité de liaison sans fil comme variable.

**3.** Dispositif d'estimation de débit (100) selon la revendication 2, dans lequel le modèle mathématique est construit en supposant une égalité entre le débit et une fonction linéaire avec les informations de qualité de liaison sans fil en tant que variable.

**4.** Dispositif d'estimation de débit (100) selon la revendication 1, dans lequel le modèle mathématique est exprimé par une équation différentielle ordinaire pour le débit avec un terme inhomogène d'une fonction prenant chacune parmi la vitesse de transmission et les informations de qualité de liaison sans fil en tant que sa variable.

**5.** Dispositif d'estimation de débit (100) selon la revendication 4, dans lequel le terme inhomogène est un produit de la vitesse de transmission et de la fonction polynomiale avec les informations de qualité de liaison sans fil en tant que variable.

**6.** Dispositif d'estimation de débit (100) selon la revendication 5, dans lequel le terme inhomogène est un produit de la vitesse de transmission et de la fonction linéaire avec les informations de qualité de liaison sans fil en tant que variable.

**7.** Dispositif d'estimation de débit (100) selon l'une quelconque des revendications 1 et 4 à 6, dans lequel le modèle mathématique est construit en exprimant la relation entre le débit, les informations de qualité de liaison sans fil et la vitesse de transmission sur la base d'un modèle dynamique.

**8.** Dispositif d'estimation de débit (100) selon la revendication 7, dans lequel le modèle dynamique comprend un corps mobile déplaçable dans une direction de déplacement prédéterminée ; et au moins l'un parmi un corps élastique se déformant dans la direction de déplacement autant que le déplacement du corps mobile dans la direction de déplacement, et un corps visqueux retardant le mouvement du corps mobile dans la direction de déplacement.

**9.** Dispositif d'estimation de débit (100) selon la revendication 8, dans lequel le modèle mathématique est construit en supposant qu'une force externe appliquée au corps mobile dans la direction de déplacement est aussi grande que conformément à la vitesse de transmission et aux informations de qualité de liaison sans fil, et en supposant que le débit est la distance dans la direction de déplacement entre une position de référence prédéterminée et la position du corps mobile.

**10.** Dispositif d'estimation de débit (100) selon la revendication 9, dans lequel le modèle mathématique est construit pour laisser le terme inhomogène exprimer la force externe.

**11.** Dispositif d'estimation de débit (100) selon l'une quelconque des revendications 8 à 10, dans lequel le modèle mathématique est construit en supposant qu'une force élastique générée par le corps élastique est aussi grande que la valeur du déplacement du corps mobile à partir d'une position exempte de force qui est la position du corps mobile lorsque la force élastique est nulle, multipliée par un coefficient élastique qui est un coefficient de proportionnalité, et la force élastique s'exerce dans le sens opposé à la direction dans laquelle le corps mobile s'est déplacé à partir de la position exempte de force.

**12.** Dispositif d'estimation de débit (100) selon l'une quelconque des revendications 8 à 11, dans lequel le modèle mathématique est construit en supposant qu'une force de résistance générée par le corps visqueux est aussi grande que la vitesse du corps mobile se déplaçant dans la direction de déplacement, multipliée par un coefficient de viscosité qui est un autre coefficient de proportionnalité, et la force de résistance s'exerce dans le sens opposé à la direction dans laquelle le corps mobile se déplace.

**13.** Dispositif d'estimation de débit (100) selon l'une quelconque des revendications 1 à 12, comprenant en outre : un moyen d'acquisition de débit pour acquérir le débit, et un moyen d'estimation de paramètre de modèle pour estimer un paramètre de modèle pour spécifier le modèle mathématique, sur la base du débit acquis et des informations de qualité de liaison sans fil acquises.

**14.** Dispositif d'estimation de débit (100) selon l'une quelconque des revendications 1 à 13, dans lequel les informations de qualité de liaison sans fil sont une valeur basée sur un indicateur de qualité de canal (CQI).

**15.** Dispositif d'estimation de débit selon la revendication 14, dans lequel les informations de qualité de liaison sans fil sont une valeur après soumission de l'indicateur de qualité de canal à un traitement de lissage.

**16.** Procédé d'estimation de débit, comprenant :

l'acquisition d'informations de qualité de liaison sans fil représentant une qualité d'une liaison sans fil établie entre une station mobile (200) et une station de base sur un réseau de communication mobile ;
l'estimation d'un débit qui est la quantité pour que la station mobile (200) reçoive par temps unitaire une donnée envoyée par un dispositif de transmission relié de manière communicante à la station mobile (200) par l'intermédiaire de la liaison sans fil, sur la base des informations de qualité de liaison sans fil acquises ;
l'estimation du débit sur la base d'un modèle mathématique représentant une relation entre le débit et les informations de qualité de liaison sans fil, et des informations de qualité d'une liaison sans fil acquises ;
l'acquisition d'une vitesse de transmission qui est la quantité des données envoyées par le dispositif de transmission (100) à la station mobile (200) par temps unitaire ; et
l'estimation du débit sur la base du modèle mathématique représentant la relation entre le débit, les informations de qualité de liaison sans fil et la vitesse de transmission, de la vitesse de transmission acquise, et des informations de qualité de liaison sans fil acquises.

**17.** Procédé d'estimation de débit selon la revendication 16, dans lequel le débit est estimé sur la base d'un modèle mathématique représentant une relation entre le débit et les informations de qualité de liaison sans fil, et des informations de qualité de liaison sans fil acquises.

**18.** Procédé d'estimation de débit selon la revendication 17, dans lequel le modèle mathématique est construit en supposant une égalité entre le débit et une fonction polynomiale avec les informations de qualité de liaison sans fil en tant que variable.

**19.** Procédé d'estimation de débit selon la revendication 17, comprenant en outre l'acquisition d'une vitesse de transmission qui est la quantité des données envoyées par le dispositif de transmission à la station mobile par temps unitaire, dans lequel le débit est estimé sur la base du modèle mathématique représentant la relation entre le débit, les informations de qualité de liaison sans fil et la vitesse de transmission, de la vitesse de transmission acquise et des informations de qualité de liaison sans fil acquises.

**20.** Programme d'ordinateur d'estimation de débit comprenant des instructions pour amener un dispositif de traitement d'informations à mettre en œuvre un procédé suivant les étapes du procédé selon l'une quelconque des revendications 16 à 19.

# Fig.1

(A)                    (B)                    (C)

# Fig.2

TRANSMITTING DEVICE —100

NW

BASE STATION —BS

RECEIVING DEVICE —200

1

EP 2 670 185 B1

# Fig.3

Fig.4

Fig.5

## Fig.6

EP 2 670 185 B1

# Fig.7

EP 2 670 185 B1

EP 2 670 185 B1

# Fig.8

(A)

(B)

(C)

# Fig.9

TRANSMISSION RATE u

W1

$p_{ref}$

THROUGHPUT v

v

$v_0$

EXTERNAL FORCE f(u)

M1

$p_0$

p

SPRING CONSTANT K

M2

VISCOSITY COEFFICIENT D

M3

W2

# Fig.10

TRANSMISSION RATE u

W1

$p_{ref}$

THROUGHPUT v

v

$v_0$

EXTERNAL FORCE f(u)

M1

$p_0$

p

M2

M3

W2

# Fig.11

TRANSMISSION RATE u

THROUGHPUT v

EXTERNAL FORCE f'(u)

W1

M1

M2

M3

M4

M5

W2

$p_{ref}$

v

$v_0$

$p_0$

p

# Fig.12

TRANSMITTING DEVICE ⌐100

RECEIVING DEVICE ⌐200

⌐102
TRANSMISSION RATE ACQUISITION PORTION

⌐101
DATA TRANSMISSION PORTION

⌐201
DATA RECEPTION PORTION

⌐103
RECEPTION RATE ACQUISITION PORTION

⌐202
RECEIVED INFORMATION TRANSMISSION PORTION

⌐104
WIRELESS LINK QUALITY INFORMATION ACQUISITION PORTION

⌐204
WIRELESS LINK QUALITY VALUE TRANSMISSION PORTION

⌐203
WIRELESS LINK QUALITY VALUE ACQUISITION PORTION

⌐105
MODEL PARAMETER ESTIMATION PORTION

⌐106
THROUGHPUT ESTIMATION PORTION

EP 2 670 185 B1

Fig.13

Fig.14

Fig.15

EP 2 670 185 B1

Fig.16

## Fig.17

Fig.18

## Fig.19

# Fig.20

EP 2 670 185 B1

Fig.21

Fig.22

EP 2 670 185 B1

# Fig.23

Fig.24

## Fig.25

## Fig.26

# Fig.27

THROUGHPUT ESTIMATION DEVICE ┌─500

WIRELESS LINK QUALITY
INFORMATION ACQUISITION
PORTION ┌─501

THROUGHPUT ESTIMATION
PORTION ┌─502

**EP 2 670 185 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 08143026 A
- JP 2004254025 A
- JP 2005244851 A
- JP 2007116329 A
- JP 2008258877 A
- JP 2008278207 A
- US 20090003236 A1
- US 20070086353 A1
- US 20100098047 A1